(19)

Europäisches
Patentamt
European
Patent Office
Office européen
des brevets

(11) **EP 3 838 567 B1**

(12) **EUROPEAN PATENT SPECIFICATION**

(45) Date of publication and mention
of the grant of the patent:
**13.08.2025 Bulletin 2025/33**

(21) Application number: **20215835.8**

(22) Date of filing: **18.12.2020**

(51) International Patent Classification (IPC):
*B29B 7/74* (2006.01)      *B29B 7/76* (2006.01)
*B29C 31/04* (2006.01)     *B29C 39/24* (2006.01)
*B29C 44/02* (2006.01)     *B29C 44/40* (2006.01)
*B29C 67/24* (2006.01)     *B29K 75/00* (2006.01)
*B29L 31/00* (2006.01)

(52) Cooperative Patent Classification (CPC):
**B29C 67/246; B29B 7/7471; B29B 7/7615;
B29B 7/7668; B29B 7/7694; B29C 31/042;
B29C 39/24; B29C 44/025; B29C 44/40;**
B29K 2075/00; B29L 2031/7622

(54) **METHOD AND APPARATUS FOR POURING A SPATTER FREE POLYMERIC MIXTURE**

VERFAHREN UND VORRICHTUNG ZUM GIESSEN EINER SPRITZERFREIEN
POLYMERMISCHUNG

PROCÉDÉ ET APPAREIL PERMETTANT DE VERSER UN MÉLANGE POLYMÈRE SANS
ÉCLABOUSSURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2019 IT 201900024949**

(43) Date of publication of application:
**23.06.2021 Bulletin 2021/25**

(73) Proprietor: **Cannon S.p.A.
20121 Milan (IT)**

(72) Inventors:
• **Volpato, Marco
20121 Milan (IT)**
• **Corti, Maurizio
20121 Milan (IT)**
• **Zampini, Samuele
20121 Milan (IT)**

(74) Representative: **Luppi Intellectual Property S.r.l.
Viale Corassori, 54
41124 Modena (IT)**

(56) References cited:
EP-A1- 2 366 525     EP-A2- 0 230 921
US-A- 4 726 933      US-A- 4 966 466

## Description

### BACKGROUND OF THE INVENTION

The present invention relates to a method and apparatus for pouring, in a controlled way, into an open moulding cavity, a flow of a chemically reactive polymeric mixture free from spatters, or with spatters having a limited flight distance, suitable for forming an expandable resin, wherein the expandable resin consists in a liquid mixture resulting from a first and at least a second chemically reactive polymeric component suitable for forming a flexible or a thermosetting resin, for example a polyurethane, phenol, epoxy, silicone or other type of resin, in particular for foaming the inner cavity of a refrigerator cabinet door, thermal insulation panel, or other object.

The pouring technology according to the present invention is thus suitable to be applied in particular in so-called "open mould" foaming processes, in which a flow of a reactive liquid mixture is poured into an open cavity of a mould or a holding shell, where the mixture is reacted and expanded until filling up the cavity of the mould or holding shell, after being closed.

The method and apparatus according to the present invention are suitable for a plurality of applications, such as foaming refrigerator cabinet doors, thermally-insulating panels for refrigerating rooms, infill panels for domestic and industrial buildings, in addition to foaming doors and profiles for windows and shutters, car seat armrests and pads, pieces of furniture and any other type of product, by means of rigid or flexible foams.

### STATE OF THE ART

Open mould foaming of chemically reactive polymeric mixtures is a well-known and widespread technology; it substantially consists in pouring or dispensing into an open moulding cavity, such as a mould or a holding shell, a metered quantity of a liquid reactive mixture, taking care of not soiling or smearing the edges and certain specific zones of the mould or holding shell, which would otherwise have to be later cleaned, or imply discarding the obtained product, with consequent economic loss and problems in the production cycle.

As known, the open mould foaming technology of expanding polymeric resins is generally carried out both with mechanical mixing devices in which the chemically reactive components are supplied into a mixing chamber with a low pressure, where the polymeric components are mixed by means of a rotary stirrer provided with pegs or blades, and with turbulence mixing devices, so-called high pressure mixing devices, where jets of the single chemically reactive components are supplied with a high pressure equal to or higher than 60 Bars ($6\,N/m^2$), in a mixing chamber, transforming the pressure energy into kinetic energy of jets that impact frontally, and/or against walls of the mixing chamber, creating a high turbulence, mixing thoroughly between each other; the resulting reactive mixture is thus supplied into an open moulding cavity through a pouring duct that is axially aligned or angularly oriented with respect to a longitudinal axis of the mixing chamber.

High pressure devices are for instance disclosed in US4098585, US3975128, US4175874 and US4332335.

Other devices are known from US4966466, EP0230921, EP2366525 and US4726933.

One of the problems related to pouring into an open mould chemically reactive polymeric mixtures, by means of high pressure mixing devices, consists in the possible formation of spatters or splashes of mixture when the operation occurs with high flowrates and speeds to pour a metered quantity of mixture into a moulding cavity in the shortest time, in order to close the moulding cavity before the mixture starts to expand, with the risk of flowing out of the moulding cavity itself, soiling the peripheral edges or flowing to specific zones of the moulding cavity, of an object or product to be made.

The problem of forming spatters occurs at the beginning or soon after the initial step of pouring the reactive mixture, when the flow flowing out of the pouring duct of the mixing device hits, with a high kinetic energy, a point or zone of an impact surface of the moulding cavity, creating spatters of mixture which, due to bouncing, can spread in any direction. The flight distance of the spatters, with respect to the impact point or zone, may be such as to smear, for example, zones of the mould or shell containing the reactive mixture, which must be kept clean in order to avoid further operations and or wastes; namely the spatters of mixture may have a high flight distance, such to flow out of the moulding cavity, staining the mould or surfaces that must stay free from spatters, and polluting the outer environment.

If the flow of the poured reactive mixture hits orthogonally the impact surface of the moulding cavity, the spatters of mixture spread radially in all directions; if by contrast the flow of mixture has a slanted direction with respect to the impact surface of the moulding cavity and implies a radial component, the splashes or spatters of mixture spread mainly in the same radial direction of the flow.

These spatters of mixture in the form of drops and filaments, form random extensions which fly over the moulding cavity with an uncontrolled flight distance, smearing specific parts of the mould, inserts made of metal, plastic or fabrics associated to the object to be produced.

The deriving smearing may result in the formation of stains, defects, zones with a different foam density or incorporation of air bubbles, once the resin has set with consequent wastes of production or need to carry out the removal of mixture spatters that have smeared the mould, and/or an accurate cleaning of the object, or waste of the object itself.

In case the presence of spatters inside the cavity of the mould is such not to create problems of waste or subsequent cleaning, or in case the spatters of mixture have a restrained flight distance, so that they cannot wet parts of the product or of the mould which must be kept clean, or zones of the moulding cavity which determine defects in the object, the production process is acceptable.

By contrast, if the flight distance is so high as to smear the mould, possible inserts, the peripheral edge of the moulding cavity or the product piece, a specific maintenance is required for removing residues of mixture or of reacted resin, or for an accurate cleaning of smeared surfaces and when possible, for applying a suitable releasing agent on the mould surface and on parts of the moulding cavity which must be clean or foam-free.

These repeated operations lead to a loss in the efficiency of productive cycles, requiring the presence of operators at workstations that are increasingly more automatized, as well as a possible premature deterioration of the moulds; furthermore these problems are made worse by the continuous increase of poured flowrates, which is required to compensate the increase of reactivity and expansion speed of the present reactive mixtures.

In an attempt to partially overcome these problems related to forming splatters of mixture, many operators only use reduced flowrates, of a constant value, reducing the flowrate and speed of the flow of mixture to values preventing spatter formation, with a flight distance that does not cause any problem, and if at all, contained within the size of the periphery of the moulding cavity or object to be foamed.

Another common precaution, for instance, consists in slanting the pouring duct of the high pressure mixing device up to 45°, with respect to the impact surface of the moulding cavity, and, in this case, in moving backwards the impact point or zone of the reactive mixture flow against the surface of the moulding cavity, in a direction that is opposite to the horizontal component of the impacting flow, taking the impact point or zone to a position that is far from the centre line of the moulding cavity; a further precaution is to maintain the outlet end of the pouring duct as close as possible to the impact surface, however this implies a high risk of interference with parts of the mould or of the piece to be foamed, which can differ each time at each pouring operation, or provided with relative movements. All the above mentioned problems involve operating at reduced flowrates for the entire productive cycle in order to avoid smearing; this in turn involves longer times for pouring the mixture into the moulding cavity, using less reactive resins and long cycle-times, with a consequent loss in productivity.

Other operators, in order to pour higher flowrates, of a constant value, make use of systems putting a shield element between the outlet end of the pouring duct of the high pressure mixing device and the impact point of the mixture against the surface of the mould, for instance using a highly slanted sheet or shield made of cardboard or metal, positioned each time under the pouring duct so as to avoid forming or spreading of spatters.

This procedure, besides being complex and little suitable for certain applications, requires replacing or cleaning the protection shield at each moulding operation.

OBJECTS OF THE INVENTION

The main object of the present invention is to provide a method for pouring into an open moulding cavity, a flow of a chemically reactive liquid mixture resulting from mixing at a high pressure a first and at least one second chemically reactive component suitable to form a polymeric resin, that is suitable to overcome the previously mentioned drawbacks and problem of splashes or spatters formation, maintaining controlled pouring conditions, without spatters, or with spatters of mixture restrained in the moulding cavity, i.e. having a flight distance equal to or lower than a pre-set safety distance.

In particular, it is an object of the present invention to allow pouring of a chemically reactive liquid polymeric mixture of expandable resins, with overall higher flowrates and comparatively shorter times than the prior art, maintaining controlled pouring conditions for-the mixture without forming spatters or with spatters having flight distances that are sufficiently restrained and contained within the moulding cavity, as regard to the peripheral edge of the mould or product, both when the mixture flow initially hits against an impact surface of an open moulding cavity, and during a subsequent step or steps of regime pouring conditions of the reactive mixture.

For the purposes of the present disclosure, the expression "pouring at controlled restraining condition of spatters" means both a complete absence of spatters of mixture, and a possible spatter formation while pouring, such that the maximum flight distance of the spatters, with respect to an impact point or zone of the mixture flow against an inner surface of a mould or shell holding a product, is always below a safety distance between the same impact point or zone and a closest point of the peripheral edge or specific zones of the moulding cavity, in particular of one of the parts composing the shell of a refrigerator door or a thermally-insulating panel; in other words, "controlled spatter restraining condition" means both a condition wherein the pouring of the mixture does not produce any spatters, and a condition wherein possible spatters of mixture remain within the moulding cavity, avoiding spreading outwardly or towards critical zones of the moulding cavity.

A further object of the invention is to provide an apparatus suitable for pouring a chemically reactive polymeric mixture, into an open moulding cavity, wherein the apparatus comprises a high pressure mixing device configured with a mixing chamber and a pouring duct, and suitable to carry out the method of pouring and restraining in a controlled way the-spatters of mixture as previously defined, and duly programmable command, actuation and control means to pour a flow of reactive mixture hitting the impact surface of the moulding cavity, such to avoid forming of spatters of mixture having too high flight distances.

## BRIEF DESCRIPTION OF THE INVENTION

The objects can be reached by the method for pouring, in a controlled and restraining condition, a chemically reactive polymeric mixture, as defined in claim 1, as well as an apparatus, as defined in claim 14.

Unexpected effects and advantages are thereby achieved, resulting from obtaining moulded items that are substantially faultless, removal of spatters of mixture that may smear the peripheral edges or certain critical zones of the moulding cavity or of the product, with cycle times that are shorter than the production methods of the prior art.

The quality of the product obtained, the reliability and automation of the production method are consequently improved.

## Brief Description of the Drawings

The method and apparatus for pouring, in a controlled splash containment, a chemically reactive polymeric mixture according to the present invention, will be further described by referring to the enclosed drawings, wherein:

Fig. 1 is a diagram showing the pouring of a chemically reactive polymeric mixture, by a high pressure mixing device, and formation of spatters having a high flight distance;

Fig. 2 is a view similar to that of figure 1, showing the formation of a first pool of polymeric mixture during an initial pouring transitional step and formation of spatters with a restrained flight distance;

Fig. 3 is a view similar to that of Figure 2, which shows the formation of a pool of mixture, without spatters, with a raised peripheral edge in form of a wave front during an initial pouring transitional step;

Fig. 4 to 6 are perspective views, which show some moments of the initial pouring transitional step and formation of the mixture pool;

Fig. 7 is a perspective view, which shows the pouring of the mixture without spatters, after the initial formation of the mixture pool;

Fig. 8 is a graph showing the ways for calculating the additional speed and flowrate coefficients of the poured mixture flow;

Fig. 9 is a longitudinal section of the high pressure mixing device of Figure 1;

Fig. 10 is an enlarged cross sectional view, along the line X-X of Figure 9, with the mixing chamber in a closed condition;

Fig. 11 is a cross sectional view, similar to that of Figure 10, with the mixing chamber in an open condition;

Fig. 12 shows and enlarged detail of Figure 9;

Fig. 13 is a general diagram of the apparatus for dosing and pouring the polymeric mixture, comprising the mixing device of Figure 9;

Fig. 14 is an enlarged view of a control unit of the apparatus of Figure 13.

## DETAILED DESCRIPTION OF THE INVENTION

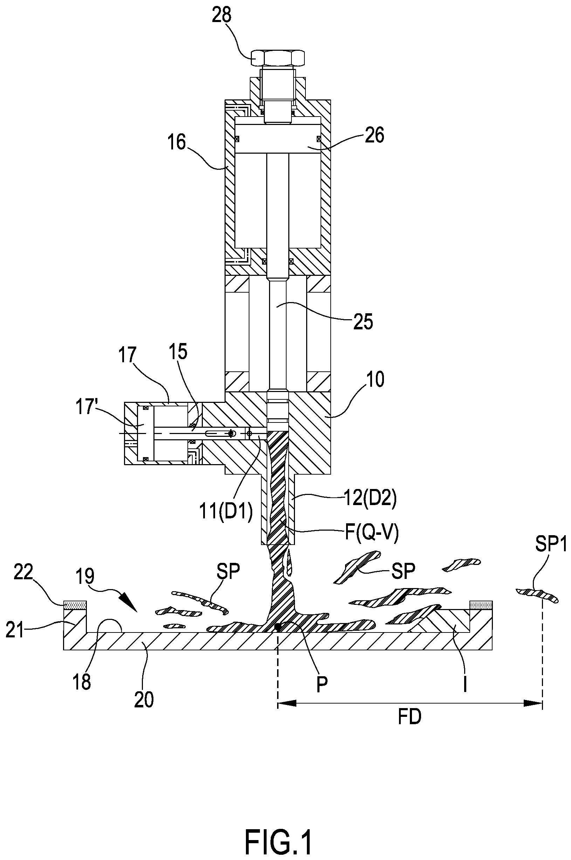

Figure 1 schematically shows the possible formation of splashes or splatters SP while pouring a chemically reactive polymeric mixture, on an impact surface of an open moulding cavity of an object, or mould, by a high pressure mixing device 10, for example of the so called "L" type disclosed in US 4332335, or of the linear type disclosed in US 4096585.

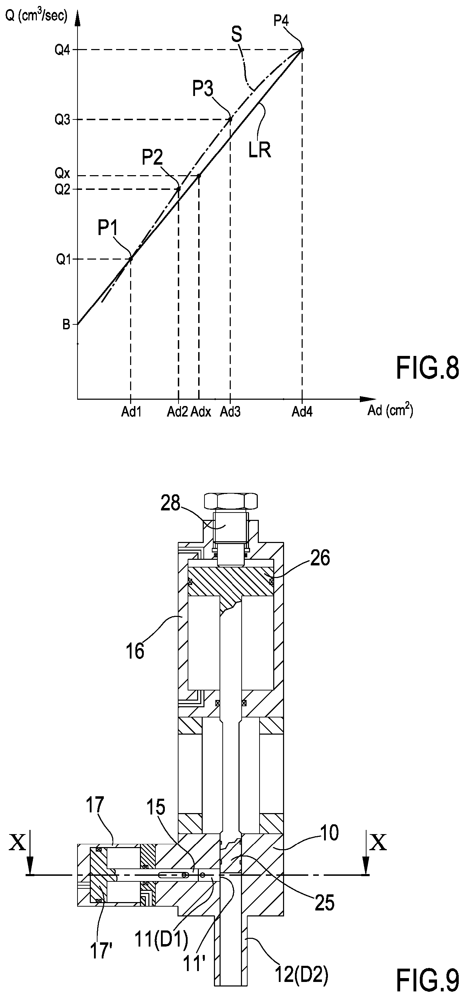

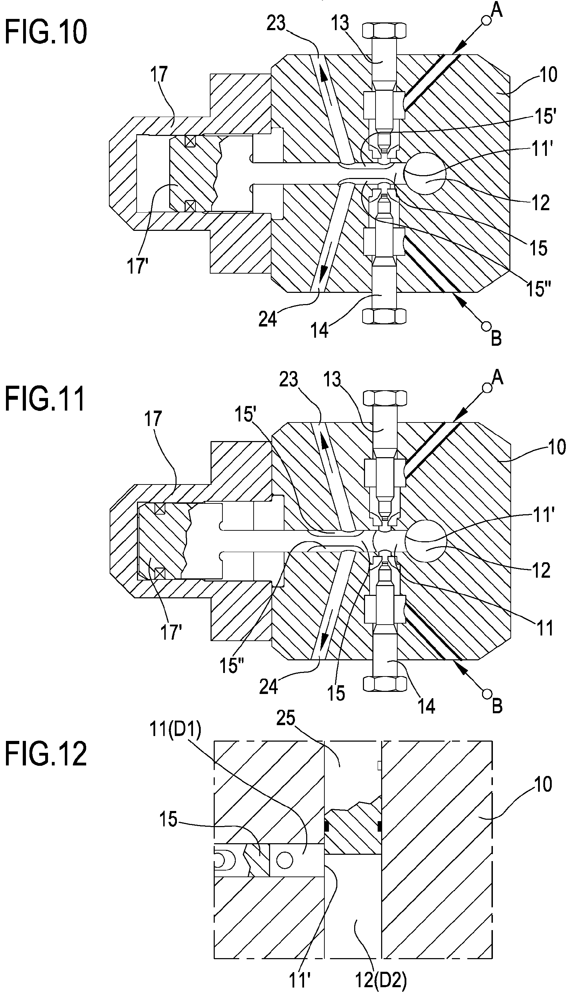

The device 10 comprises a mixing chamber 11 having a diameter D1, oriented orthogonally with respect to a pouring duct 12 having an inner diameter D2, as further described referring to the following Figures 9-12. In the open condition of Figures 1, 2, 3, 9, 11, 12, a first injector 13 (Figure 11) supplies into the mixing chamber 11, a high kinetic energy jet of a first liquid component A, while a second injector 14 supplies into the mixing chamber 11 a respective and simultaneous high kinetic energy jet of a second liquid component B, suitable for forming a chemically reactive polymeric mixture or a polymeric resin of the previously defined type. The jets of the liquid components A and B hit frontally and/or against the walls of the mixing chamber 11 with a high turbulence and kinetic energy, thoroughly mixing and resulting into a liquid mixture of a chemically reactive polymeric resin; the reactive mixture flowing into the pouring duct 12 fills it during a first initial transitional step and flows out with a flow F having a specific flowrate Q, and a specific speed V related to the flowrates of the single polymeric components A, B, the rheological characteristics of the reactive mixture, as well as the cross section of the pouring duct 12 of the specific mixing device 10 employed.

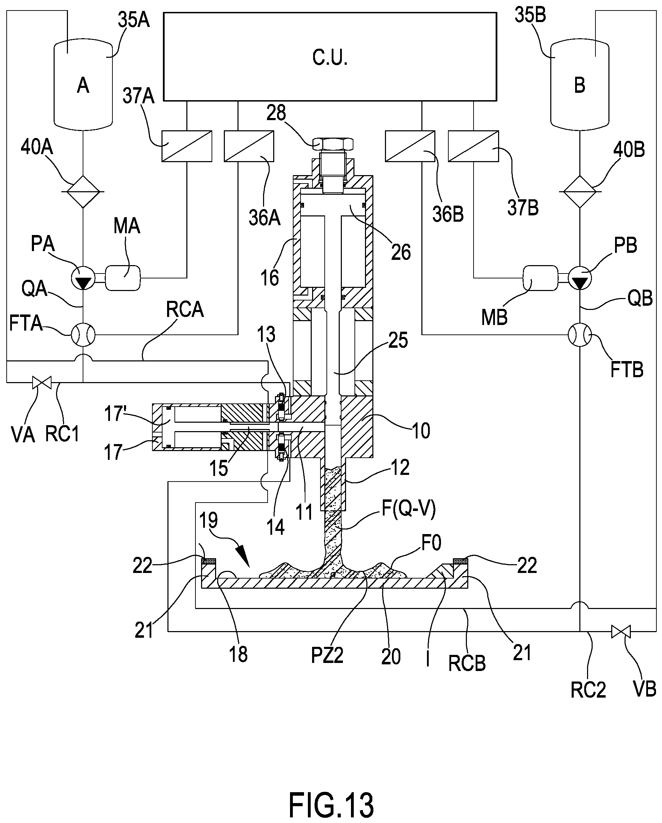

Inside the mixing chamber 11 slides a valve member 15 that is operatively connected to the piston 17' of a control hydraulic cylinder 17. In a known way, the valve member 15, as will be hereinafter described and shown in Figures 10 and 11, is configured with longitudinal-slots 15', 15" which, in the advanced position of the valve member 15 in which closes the mixing chamber 11, determine the recirculation of the chemical components A and B towards respective storage tanks, not shown in Figure 1, and indicated by 35A and 35B in Figure 13; and also to eject in the pouring duct 12 the reactive mixture which remains in the mixing chamber 11 at the end of each operative cycle, by advancement of the valve member 15, as hereinafter described.

As clearly shown in Figure 1, the flow F of liquid reactive mixture flowing out from the pouring duct 12 with a certain flowrate Q and speed V, impacts in a prefixed zone or point P, against an impact surface 18 of an open moulding cavity 19 of a containment shell for the reactive mixture, or of a mould 20. The flow F of reactive mixture, directed towards the impact surface 18 of the moulding cavity 19, may impact orthogonally against said surface 18, as shown, or with a tangential component of the speed of the flow F, resulting from tilting the pouring duct 12, i.e. as a consequence of a relative movement between the mixing device 10 and the surface 18 of the moulding cavity 19.

If the flowrate Q and the speed V of the flow F are too high, due to the impact against the surface 18, spatters SP of mixture form as drops and/or filaments. The flight distance FD of the aforesaid drops and/or filaments as measured from the impact point or zone P, may be equal to or higher than the minimum distance between the same impact point or zone P on the surface 18 and the peripheral edge 21, or other specific zone of a shell to be filled with foam, or of the moulding cavity, as shown for SP1, which may have important functional elements such as a gasket 22; in such a circumstance, there is a risk of soiling the edge 21 itself, the gasket 22, zones outside the mould or shell to be foamed, or specific zones of the moulding cavity 19 hereinafter specified: the aforesaid specific zones may comprise zones wherein the surface of the moulding cavity clearly shows changes in the lying shape, for instance due to walls or upwardly protruding partitions, and/or zones on which inserts are provided.

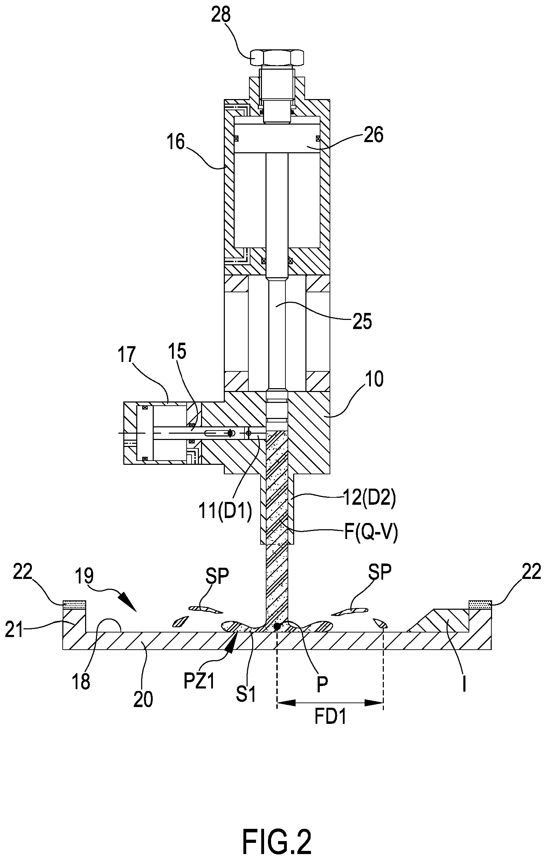

Figure 2 shows the same mixing device 10 of Figure 1, in a pouring condition of the reactive mixture, according to the method of the present invention, which will be further described referring to the following Figures.

In Figure 2 and in the following ones the same letters and the same reference numbers as in Figure 1 were used to refer to similar or equivalent parts.

On the basis of experimental tests carried out with a high pressure mixing device 10 of the prior art type, supplied with two liquid chemically reactive components A, B suitable for forming a polyurethane mixture, it was observed that, operating in cohesive and/or laminar conditions of the flow F poured by the mixing device 10, with reduced flowrates Q and speeds V of the flow F comparatively lower with respect to pouring values of regime pouring conditions, possible spatters SP of reactive mixture generated in the whole pouring operation, particularly both during an initial transitional step, and in regime conditions, may be restrained within the peripheral edge 21 of the specific moulding cavity 19, according to the example shown, with restrained flight distances FD1 (Figure 2) with respect to the peripheral edge 21 or other specific zone of the moulding cavity 19.

For the purposes of the present invention, "cohesive" flow means that, once the reactive mixture has initially filled the pouring duct 12, as shown in Figure 2, the exiting flow F does not have vein separations, though it can have swellings on the surface or waves indicative of movements inside the same flow, which are characterized by inner movements and speed that are substantially parallel to the flow F trajectory. By contrast "laminar" flow means a condition that is free from inner motions, characterized by speeds parallel to the direction of the flow.

From the tests carried out it was verified that when initially pouring the mixture:

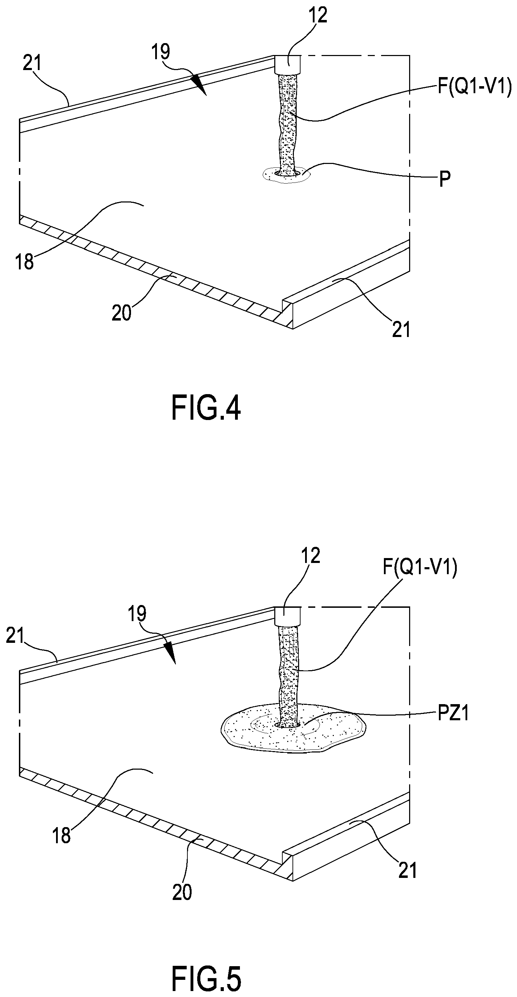

a) During a first transitional pouring step, soon after the backward movement of the valve member 15 to open the mixing chamber 11 and the nozzles 13, 14 allowing the introduction into the mixing chamber 11 of jets of polymeric components A, B, the pouring of the flow F occurs in a condition in which the pouring duct 12 (figure 1) is not completely filled, in which the flow F impacts in the zone P against an impact surface 18 of the moulding cavity 19 that is not yet wet, Figure 4. In this first transitional step of initial pouring, the outcoming flow F of mixture may be non-cohesive and divided into separate flows in form of drops and strings (Figure 1) due to the air still present within the pouring duct 12, such air being dragged by the same flow of resin before filling completely the pouring duct 12.

b) During a second initial transitional pouring step, immediately after step "a", the pouring of the flow F of reactive mixture occurs in conditions in which the pouring duct 12 is filled completely; this implies forming a first or initial pool of mixture PZ1 having an irregular peripheral edge, as schematically shown in Figures 2 and 5, with a low thickness that enables wetting the impact surface 18 and that, at flowrates close to producing spatters SP1 which might fly to the peripheral edge of the moulding cavity 19, and beyond it, has a substantially flat, irregular and poorly defined edge.

c) During a third step of initial transitional pouring, after step "b", the pouring of the flow F of reactive mixture always occurs filling completely the pouring duct 12 and forming a pool of mixture PZ2 having a peripheral edge in form of a wave front, and a central zone with a first thickness that is comparatively low, positioned where the flow F impacts against the surface 18 of the moulding cavity 19, and where it flows in a radial direction pushed by the flow F continuously being poured, towards a peripheral zone where the flow of mixture slows down and accumulates with a thickness that is comparatively greater than the previous pool of mixture PZ1. During this third pouring step c, along the peripheral edge a wave front FO is formed which is raised with respect to the inner surface of the pool itself PZ2.

The flow F of reactive polymeric mixture outcoming the pouring duct 12 in the three previously defined pouring steps, as assessed by experimental tests carried out starting at a high speed, impacts in P against the surface 18 of the moulding cavity 19 under conditions and in ways that may depend on one or more of the following elements, separately or in combination:

- flowrate Q and consequent impact speed V of the poured flow F which, for distances of the outlet ends of the pouring duct 12 from the impact surface 18 of the moulding cavity 19, for instance, lower than 400 mm, is considered hereinafter as a value not different from the flow F speed at the outlet end of the pouring duct 12;
- cross section or inner diameter D2 of the pouring duct 12;
- possible partial closure of the outlet end 11' of the mixing chamber towards the pouring duct 12;
- rheological characteristics of the polymeric components, or of the resulting reactive mixture, in particular viscosity;
- Ratio between sizes of the pool PZ2 of mixture and cross section or inner diameter D2 of the pouring duct 12.

As referred, in these condition, during the initial transitional pouring step of the reactive mixture, the flow F of mixture may result in spatters SP in form of drops and/or filaments which can bounce even far from the impact zone P, in at all accidental directions, in case flowrate Q and impact speed V of the flow F are too high.

After studying better the phenomenon it was in fact observed that during the first step "a" of the initial transitional pouring step, if the impact speed V of the flow F is too high, and if the flow F is fragmented, since it can contain incorporated air which interrupts its compactness and causes fragmentation into drops and/or filaments, spatters SP due to bounces of the first flow F impacting against the surface 18 of the moulding cavity 19.

Experimental tests have allowed to ascertain that during the first step "a" of the initial transitional step, the formation of spatters SP derives from the fact that the initial drops and filaments, are not yet slowed down by the viscous resistance to the radial sliding from the pool SP of mixture present on the surface 18 of the moulding cavity 19, and not even by sufficient cohesion force due to the surface tension of the liquid mixture; therefore they can bounce and fly far from the impact point or zone P, in a different way from what happens in steps "b" and "c".

As previous mentioned, the first step "a" of the initial transitional pouring step of-the mixture, is followed by the second transitional step "b"; in this second transitional step the flow F of reactive mixture starts filling the pouring duct 12; however the outcoming flow F may be non-laminar and characterized by some accidental waves or rotations. During this second transitional step "b", on the impact surface 18 of the moulding cavity 19 a first initial pool of reacting mixture PZ1 is formed; however the pool of mixture PZ1, at flowrates Q close to producing spatters SP which may fly to the peripheral edge 21 of the moulding cavity 19, has irregular edges and a very low first thickness S1 with respect to the thickness S2 of the following pool PZ2, which substantially corresponds to the wetting one of the surface (Figure 2).

For initial values of the flowrate Q and impact speed V of the poured flow F which are suitably restrained or low, if compared to regime values, spatters SP of the reactive mixture may not form, or may spread with a restrained flight distance FD1, which is limited with respect to the peripheral edge 21 and other specific zone of the moulding cavity 19 of the mould 20, product or containment shell of the reactive mixture for producing an object or a moulded piece.

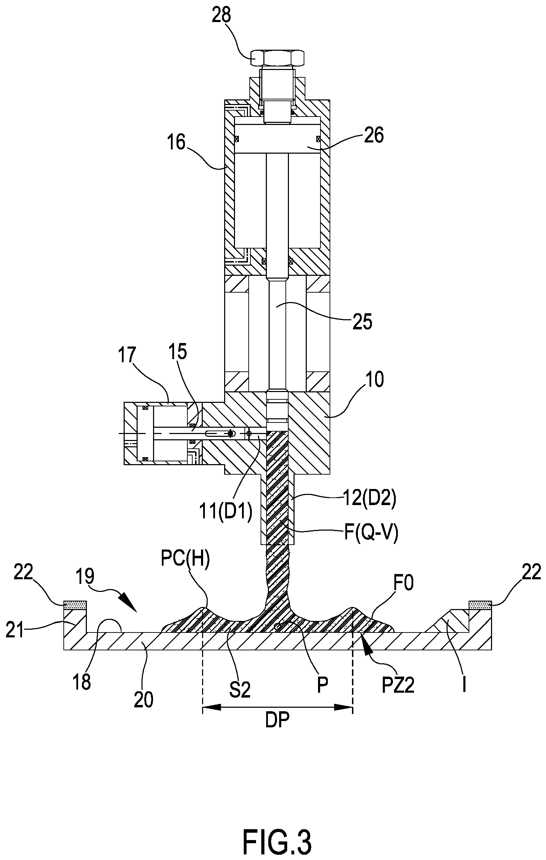

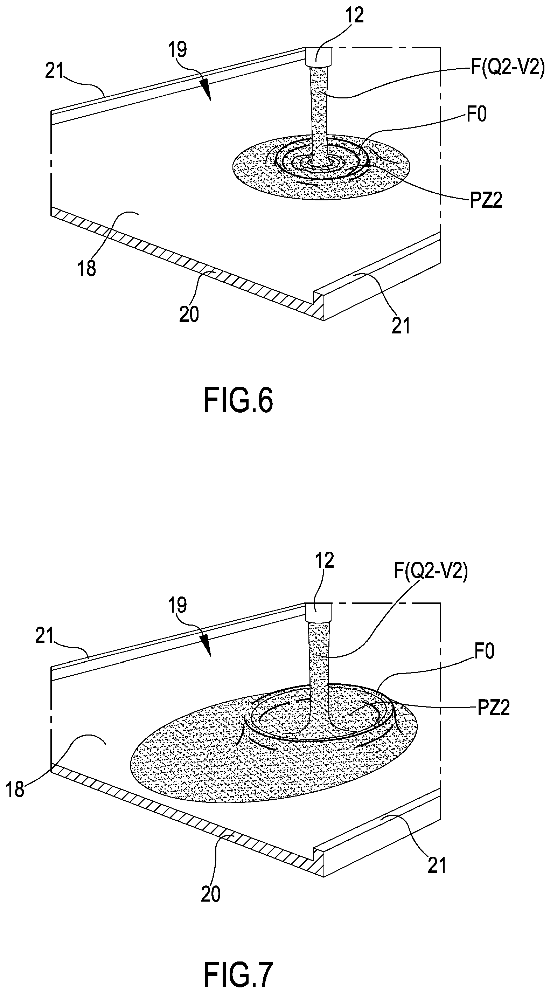

These two first transitional steps "a", "b" end in a short interval of time, in the order of some fractions of a second; then the flow F of mixture poured during the transitional step "c" determines the formation of a sufficiently wide pool PZ2 (Figures 3 and 6), characterized by an inner zone with a comparatively low thickness S1, where the flow F hits and from which the mixture rapidly flows in all radial directions, pushed by the following flow F; the pool PZ2 is further configured with a peripheral edge where the mixture slows down and accumulates with a thickness S2 comparatively higher than that of the inner part around the impact point P, forming a high edge with respect to the surface of the pool PZ2, in form of a wave front FO, which spreads and enlarges radially pushed by the flow F which continuously impacts in P against the surface 18 of the moulding cavity 19, leading the wave front FO to enlarge continuously (Figure 6 and 7).

In this condition, a subsequent pool of mixture PZ2 forms on the surface 18 of the open moulding cavity 19, Figures 3 and 6, having a high average peripheral thickness, comparatively higher than the thickness of the first pool of mixture PZ1.

It is therefore convenient during the initial transitional steps, corresponding to steps "a" and "b", to operate with a comparatively low flow F under cohesive or laminar conditions, so that the flow F does not form any splashes or forms splashes SP with a reduced flight distance, restrained in the moulding cavity 19.

During this third pouring step "c", the flow of mixture F which is progressively poured into the pool PZ2, in cohesive and/or laminar conditions, spreads around the impact zone P forming a raised edge in form of a wave front FO having a height H of the wave peak PC that is greater than the thickness S2 of the pool PZ2; the wave front FO flows radially and enlarges until it slows down and gets stable at a certain distance from the impact zone P in a peripheral position pushed by the radial flow of the mixture which is progressively and continuously poured into the pool PZ2, as shown in Figure 7.

The poured flow F impacting the surface 18 in P of the moulding cavity 19, deviates along the surface itself enlarging, radially pushing the layer of mixture already present on the surface 18, increasing the thickness S2 thereof; the speed of the wave front FO, due to the viscous friction and increase in thickness S2, decreases proportionally to the increase of its width and the thickness S2, thus determining spatter SP dampening conditions.

Tests carried out showed that, with the flow F impacting orthogonally the surface 18, when the circular pool of mixture PZ2 reaches a minimum width, corresponding to the average diameter DP of the peak PC, about 4 times as large as the inner diameter D2 of the pouring duct 12, little lower or little higher than 4 times the aforesaid diameter D2 (e.g. 3 - 10%); or more in general comprised between 3 and 6 times the inner diameter D2 of the pouring duct 12, with values of the diameter DP of the pool PZ2 which decrease as the viscosity of the reactive mixture increases, the thickness S2 of the reactive mixture in the pool PZ2 and the height H of the peak PC of the wave front FO, are increased such to prevent, even at increased flowrates Q and speeds V, forming of spatters SP which, otherwise, by bouncing, would tend to fly towards the edge 21 of the open moulding cavity 19, or towards inserts I which should stay clean.

In case the flow of mixture F is slanted of an angle lower than 90° with respect to the inner surface 18 of the moulding cavity, the pool of mixture PZ2 takes on an elongated ovoidal shape in the flow direction F; in this case minimum width of the pool PZ2 means the diameter of an ideal circle of the peripheral peak, as measured orthogonally to the flow F direction.

The pool PZ2 of reactive mixture with raised peripheral edge in form of a wave front which is formed during the third pouring step "c", tends to dampen the radial component of the flow F impacting and enlarging on the surface 18, preventing or limiting splash or spatter formation or spreading thereof on the aforesaid specific zones of the moulding cavity; spatter formation SP is inhibited or limited by the pool PZ2 even for flowrate Q2 values, at regime operative conditions, that are comparatively much higher than the value Q1 of the pouring flowrate during the initial transitional step, as far as the flow F of mixture is cohesive or in laminar conditions.

In general, according to the present invention, it was provided a method for pouring, in a condition without spatters or with spatters having a restrained flight distance FD, a flow F of a liquid mixture of a first A and at least a second B chemically reactive component suitable for forming a polymeric resin, in an open moulding cavity 19 or shell to be filled with foam, having an impact surface 18 and a peripheral edge 21, and by a high pressure mixing device 10 comprising a mixing chamber 11 that communicates with a pouring duct 12, having an inner diameter D2 orthogonally oriented with respect to the mixing chamber 11, wherein the high pressure mixing device is configured to pour a controlled flowrate with a regime value Q2 at operative conditions, and is operatively connected to a programmable control apparatus, said method comprising the steps of:

pouring, during an initial transitional step, a flow F of reactive mixture with a reduced pouring flowrate Q1 that is comparatively lower than said regime a flowrate Q2 of the high pressure mixing device, orienting the flow F of reactive liquid mixture towards an impact point or zone P of the moulding cavity, forming a pool of mixture on the bottom surface 18 of the open moulding cavity 19, and comprising the steps of:

pouring, during the initial transitional step, a flow F of reactive liquid mixture with the reduced flowrate Q1, maintaining pouring conditions of the flow of mixture F, which, upon impact with the surface 18 of the moulding cavity, do not form spatters or form spatters having a restrained flight distance FD lower than the distance between the impact point or zone P and a zone closer to said peripheral edge 21 of said cavity or of said shell or of a specific zone of said open moulding cavity 19 wherein an insert or a partition or a wall protruding upwards is provided, forming in a first step an initial pool of mixture PZ1 having an irregular edge;

pouring, in the initial transitional step, into the initial pool of mixture PZ1 a metered quantity of a liquid reactive mixture, always maintaining a reduced pouring flowrate Q1 and pouring conditions which prevent spatters, or with spatters having a restrained flight distance FD, forming a subsequent second pool PZ2 of greater sizes or larger (if compared to said first initial pool PZ1) of liquid reactive mixture, configured with a raised peripheral edge, in the form of a wave front FO having a wave peak PC with a height H greater than the thickness S2 of an inner zone, delimited by said raised peripheral edge, of said subsequent second pool of mixture PZ2, and having a width DP that is about equal to or at least three or four times greater than the inner diameter D2 of the pouring duct 12; and

increasing, after the initial transitional step, the pouring of the liquid reactive mixture towards said subsequent second wider pool PZ2 until the regime flowrate Q2.

In other words, the method provides pouring a flow F of a chemically reactive polymeric mixture resulting from a first component A and at least a second component B, with flowrates Q and speeds V close to a condition of forming spatters of mixture SP that can fly near, and not beyond the peripheral edge 21 or other specific zone of an open moulding cavity 19 configured with an impact surface 18, by a high pressure mixing device 10 comprising a mixing chamber 11 having a diameter D1, which communicates with a pouring duct 12 configured with an inner diameter D2; wherein the flow F of reactive mixture is oriented orthogonally or slanted towards and against an impact zone P of the surface 18 of the moulding cavity 19, wherein the method comprises the steps of:

pouring, during an initial transitional step, a flow F of a reactive polymeric mixture with an initial flowrate Q1 and an initial speed V1 comparatively lower than a regime flowrate Q2 and speed V2, such as to enable pouring reactive mixture without spatters SP, or with spatters SP having a flight distance FD restrained in the moulding cavity 19;

pouring, during the initial transitional step, with an initial pouring flowrate Q1, at least a metered quantity of a reactive mixture sufficient to form a pool PZ2 having a raised peripheral edge FO in form of wave front, in a condition of cohesive or laminar flow F with pouring duct 12 full of reactive polymeric mixture, until a width of the pool of mixture PZ2 having a minimum peak diameter DP at least equal to three or four times the diameter D2 of the pouring duct 12, or higher;

increasing, after the initial transitional step, the flowrate of the flow F of a reactive mixture poured into the pool PZ2 configured with a raised edge in form of a wave front, until a regime value Q2, maintaining the flow F in cohesive or laminar conditions, with speed and impact and flowing conditions on the surface 18 without spatters SP, or with spatters SP having a restrained flight distance, i.e. contained in the moulding cavity 19.

In particular, the method provides maintaining, for the reactive mixture flowing out of the pouring duct 12 with inner diameter D2, cohesive flow FP conditions, in which conditions said reactive mixture, once initially filled in said pouring duct 12, flows out of said pouring duct 12 without vein separations, with possible inner motions transversal to the flow but contained within the jet with the veins substantially parallel to the flow F trajectory, or it flows out in a laminar flow condition, without inner motions traversal to the flow and with speeds parallel to the direction of said flow F.

The flowrate Q and speed V values of the flow poured F during the initial transitional step may be defined by experimental tests carried out by means of a conventional high pressure mixing device, operating in such a way that, both during an initial transitional step, and later on, pouring the reactive mixture occurs under a controlled condition of impact flowrate and speed and flowing on the surface 18 with no spatters of mixture SP, or spatters SP having a restrained flight distance, lower than a distance comprised between the impact zone P of the flow F and a closest point of the peripheral edge 21 of the moulding cavity or of the other above indicated zones of the moulding cavity 19.

The flowrate and speed values of the reactive resin during the initial transitional step suitable for enabling pouring in a cohesive or laminar condition, without spatters or with spatters having a restrained flight distance, may be determined experimentally based on the following general formula:

$$1)\ Q = C \cdot Ad + B$$

where

Q - is the pouring flowrate not producing spatters or producing spatters SP with a restrained flight distance during the initial transitional step, with the mixing chamber outlet totally opened, in $cm^3/sec$;

C - is a specific speed coefficient, in cm/sec, determined by linear interpolation of a curve of flowrates Q corresponding to different cross section values Ad of the pouring duct 12,

Ad - is the value of the cross section of the pouring duct, in $cm^2$;

B - is a base flowrate coefficient in $cm^3/sec$, deriving from a linearization process of experimental data and defined by intersecting an interpolation straight line LP of the aforesaid curve S with the axis of the flowrates Q of the diagram of Figure 8 described hereinafter.

Starting from formula 1, based on the experimental data, for a specific reactive polymeric mixture, it is thus possible to calculate a specific speed coefficient C and a base flowrate coefficient B, with spatters SP having a restrained flight distance FD as defined, and consequently the flowrates Q of the initial transitional step, as the cross section Ad of the pouring duct 12 of the high pressure mixing device 10 varies.

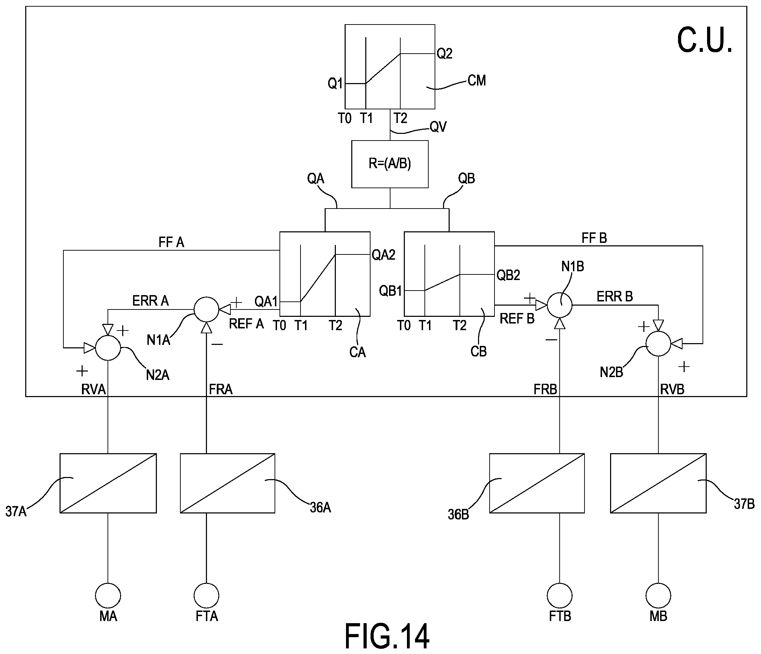

The calculation criteria are described for exemplary purposes, with reference to the diagram of figure 8, for a general reactive mixture, using a common high pressure metering and pouring apparatus, described hereinafter with reference to the apparatus of Figures 13 and 14.

As shown in figure 8, at different sections Ad1, Ad2, Ad3 and Ad4 of the pouring duct 12, the values of the corresponding flowrates Q1, Q2, Q3 and Q4 of the initial transitional step were measured, in absence of spatters of mixture, or with spatters having a restrained flight distance.

By the known method of linear interpolation, the curve S passing through points P1, P2, P3 and P4 was replaced by the straight line LR in the range Ad1-Ad4; the slope of the straight line LR thus corresponds to the speed coefficient C of the previous formula 1, while the point of intersection with the straight line LR for a general dimension of the cross section Ad of the pouring duct 12, allows to detect the flowrate value QX enabling pouring conditions without spatters or with spatters having a restrained flight distance, during the initial transitional step.

The intersection of the straight line LR with the axis of the flowrates Q, allows instead calculating the base flowrate coefficient B resulting from the linearization, for sections of the pouring duct 12 tending towards zero.

Pouring the reactive mixture, both during the initial transitional step and during the regime flowrate may occur with the mixing chamber outlet 11 completely opened or reduced in a wide range of values.

Reducing the mixing chamber outlet 11 may be made in any way, acting on an adjustable stop member for the piston of a control hydraulic cylinder of a throttling or reduction member of the outlet end 11' of the mixing chamber 11, as hereinafter described.

Good results were obtained using a high pressure mixing device, so-called of the "L"-type, wherein the pouring duct 12 was oriented orthogonally to the mixing chamber 11, for example of the type shown in US 4332335 and illustrated in figures 9-13 of the enclosed drawings.

During the tests carried out, a high pressure mixing device 10 was used supplied with two chemically reactive polymeric components A and B, such as a polyol and an isocyanate, adapted to form a polyurethane mixture; however, it is not excluded that the pouring method without spatters or with spatters with a restrained flight distance, object of the present invention, may be implemented using any high pressure mixing device configured to supply one or more chemically reactive polymeric components, including a possible supply of one of the components in the axial direction of the mixing chamber, through a longitudinal hole in the sliding valve member of the mixing chamber, for instance as described in US 6079867.

In brief, as shown in Figures 9-12, the high pressure mixing device used during the tests comprises a base body 10 configured with a mixing chamber 11 having a diameter D1, and with a pouring duct 12 having a diameter D2 greater than the diameter D1, arranged orthogonally to the mixing chamber 11, and with nozzles 13, 14 for injecting two polymeric components A, B.

A sliding valve member 15 operatively connected to the piston 17' of a control hydraulic cylinder 17, is axially sliding into a hole of the body 10 to be moved between a backward position, shown in Figure 11 and 12 wherein it opens the mixing chamber 11 towards the pouring duct 12, and an advanced position, shown in Figure 10 in which it closes the outlet end 11' of the mixing chamber 11 towards the pouring duct 12, ejecting into the latter the residual polymeric mixture which remains into the mixing chamber 11 at the end of each pouring operation; and in which it provides, in a known way, recycling the single components A, B by respective recirculation grooves 15', 15" which, in the advanced position of the valve member 15, place injectors 13 and 14 into communication with respective recirculation ducts 23, 24.

The mixing device is also provided with a cleaning member 25 axially sliding into the pouring duct 12, operatively connected to the piston 26 of a second hydraulic cylinder 16 to be moved between a backward position in which it totally or partially opens the outlet end 11' of the mixing chamber 11, and a totally advanced position in which it ejects the residual polymeric mixture which remains in the same duct 12 at the end of each pouring operation.

The cleaning member 25 may also be moved towards the opening and stopped with its front end at a plurality of intermediate positions wherein it partially close the opening of the outlet end 11' of the mixing chamber 11.

Figure 12 shows, for exemplary purposes, a condition wherein the cleaning member 25 of the pouring duct 12 is in an intermediate position wherein it reduces the outlet opening 11' of the mixing chamber 11, with a degree of reduction namely of restriction of the opening towards the pouring duct defined by a referred percentage value of the diameter D1 of the mixing chamber 11 itself.

The degree of partial closure of the outlet opening 11' of the mixing chamber 11, may vary between 0% (mixing chamber 11 totally open), and 90% or little higher (strongly reduced outlet opening 11' of the mixing chamber 11); again, as shown in Figure 9, the reduction of the outlet 11' of the mixing chamber 1 may be varied and adjusted acting on a stop member 28 of the piston 26, that can be screwed in the rear portion of the control hydraulic cylinder 16, or in another functionally equivalent way.

During various tests by polyurethane mixtures, different closure degrees of the outlet 11' of the mixing chamber 11 were operated, in order to detect the flowrates Q1 of the initial transitional step, and of the regime Q2, without spatters or with spatters SP having a restrained flight distance, based on the previously referred formula 1.

In particular two specific flowrate fields were defined, for which there is no formation of spatters or the flight distance of the spatters SP in the first step "a" and in the second step "b" of the initial transitional flowrate for pouring the reactive mixture remains constant.

The two flowrate fields were defined by conventional tests, with partial closure degree of the outlet end 11' of the mixing chamber 11 comprised between 0% and 40%, respectively reduced between 40% and 90% of the diameter D1 of the mixing chamber 11. It was possible to define a first field of partial closure in which a poured flowrate $Q_{00}$ is set without forming mixture spatters, as previously defined, during the initial transitional pouring step, with a closure degree of the outlet 11' of the mixing chamber 11 comprised between 0% and 40%, hereinafter also referred to as "zero spatters" field; and a second field with poured flowrate $Q_{op}$ and with a high closure degree of the outlet end 11' of the mixing chamber 11 comprised between 40% and 90%, hereinafter also referred to as "zero spatters" field having a high closure degree.

The first flowrate field $Q_{oo}$ with low closure degree comprised between 0% and 40% may be defined on the basis of formula 2: n

$$2) \qquad Q_{oo} = C_o \cdot Ad + B_o$$

where

$Q_{oo}$ - is the pouring flowrate, in $cm^3/sec$, which does not form spatters ("zero-spatters" condition) during the initial transitional step;

Ad - is the cross section of the pouring duct 12, in $cm^2$;

$C_o$ - is a flow speed coefficient, in cm/sec, in absence of spatters;

$B_o$ - is a base flowrate coefficient, in $cm^3$/sec, deriving from a linearization process of experimental data, as shown in Figure 8.

For formula 2 the following optimal value ranges can be defined:

Ad: comprised between 0.5 and 8 $cm^2$;
$C_0$: comprised between 1 and 50 cm/sec;
$B_o$: comprised between 20 and 250 $cm^3$/sec.
wherein increasing degrees correspond to increasing partial closure degrees i.e. restriction of the outlet opening 11' of the mixing chamber 11, with a reactive mixture viscosity equal to or higher than 0.4 Pascal.sec, e.g. comprised between 0.4 Pascal.sec and 5.0 Pascal.sec, expressed as the average of the viscosity of the various polymeric components, taking into consideration the relative mixing stoichiometric ratio at the pouring temperature.

It was also possible to define a second higher reduction field of initial flowrate $Q_{op}$ in which set the control apparatus, without forming spatters during the initial transitional step, with the outlet 11' of the mixing chamber 11 with a high closure degree between 40% and 90% on the basis of formula 3:

$$3) \qquad Q_{op} = C_1 \cdot Ad + B_1$$

where

$Q_{oo}$ - is the pouring flowrate, in $cm^3$/sec, which does not form spatters during the initial transitional step with high reduction;
Ad - is the cross section of the pouring duct, in $cm^2$;
$C_1$ - is a flow speed coefficient, in cm/sec, in absence of spatters;
$B_1$ - is a base flowrate coefficient, in $cm^3$/sec, deriving from the linearization process of experimental data.

Again, optimal value ranges can be defined for pouring conditions without spatters, with a high reduction, during the initial transitional step, as indicated:

Ad: comprised between 0.5 and 8 $cm^2$;
$B_1$: comprised between 20 and 300 $cm^3$/sec;
$C_1$: comprised between 1 and 50 cm/sec.

Values increase as the reduction degree increases, as previously defined.
According to a further aspect of the invention, it is possible to define a third and a fourth specific flowrate field, based on the section Ad of the pouring duct 12, resulting in the formation of patters during the first two initial transitional steps "a", "b", wherein the flight distance FD is lower than a reference distance such not to cause smearing of mixture at outer zones of the moulding cavity 19 or shell to be filled with foam, or specific zones of the moulding cavity - such as protruding zones or zones with gaskets and/or inserts - i.e. spatters outside the same moulding cavity.

The reference flight distance depends on the geometrical shape and on the dimensions of the moulding cavity, and may be equal to or lower than 45% of the minimum width of the moulding cavity; for moulds suitable for foaming refrigerator doors, panels or objects similar thereto, an optimal reference distance may be comprised between 300 and 350 mm, or lower.

A third and a fourth flowrate field at which set the mixing apparatus during the initial transitional step, may be defined again by partially closing the section of the outlet end 11' of the mixing chamber 11 to a low degree between 0% and 40%, respectively to a high degree between 40% and 90%.

In particular, the third flowrate field with a lower reduction degree, i.e. comprised between 0% and 40% may be defined on the basis of formula 4:

$$4) \; Q_{lso} = C_2 \cdot Ad + B_2$$

where

$Q_{lso}$ - is the initial pouring flowrate which produces spatters of mixture with a flight distance equal to or lower than a specific reference distance, expressed in $cm^3$/sec;
Ad - is the cross section of the pouring duct, in $cm^2$;
$C_2$ - is a flow speed coefficient in cm/sec;
$B_2$ - is a base flowrate coefficient in $cm^3$/sec., as previously defined.

Again, the following optimal values can be defined:

Ad: comprised between 0.5 $cm^2$ and 8;
$C_2$ - comprised between 50 and 90 cm/sec;
$B_2$ - comprised between 200 and 350 $cm^3$/sec.

Values increase as the reduction degree increases.
In turn, the fourth flowrate field, with a higher degree of high reduction of the outlet 11' of the mixing chamber 11 comprised between 40% and 90% can be defined based on formula 5:

$$5) \; Q_{lsp} = C_3 \cdot Ad + B_3$$

where

$Q_{Isp}$ - is the pouring flowrate of the initial transitional step, in cm$^3$/sec
Ad - is the cross section of the pouring duct in cm$^2$;
$C_3$ - is a flow speed coefficient in cm/sec;
$B_3$ - a base flowrate coefficient in cm$^3$/sec., as previously defined.

The following optimal values can again be defined:

Ad: comprised between 0.5 and 8 cm$^2$;
$C_1$: comprised between 50 and 95 cm/sec;
$B_3$: comprised between 250 and 420 cm$^3$/sec.

Values increase as the reduction degree increases.

It is finally possible to define a regime of increased flowrate, below which no spatters are formed after forming the pool PZ2 with a raised peripheral edge in form of a wave front at the end of the initial transitional step, after filling the pouring duct 12 and the subsequent formation of the raised peripheral edge of the pool PZ2 of liquid mixture around the impact zone P, whose thickness is sufficiently high as to form a projection FO in form of a wave which prevents flow bouncing and forming spatters, as previously reported.

According to tests carried out it is possible to increase the flowrate Q, after forming the initial pool PZ2 with a raised peripheral edge in form of a wave front, subsequent to step "b" of the initial transitional step, up to the limit in which the flow F outcoming the pouring duct 12 is no longer cohesive, i.e. until the limit in which the flow of mixture starts to form strings or spatters SP at the outlet of the pouring duct 12; it was proven that such phenomena may depend on the length extension of the pouring duct 12 and on the reduction degree of the section or opening of the mixing chamber 11.

Based on the tests carried out, considering that the cross section of the pouring duct 12 is comprised between 0.5 cm$^2$ and 8 cm$^2$, it is possible to:

i) Set the mixing apparatus in relation to the section or outlet opening condition of the mixing chamber, from totally open until 40% of partial closure, as referred to the diameter D1, and set the dosing equipment to increase the flowrate to be poured, after the end of the initial transitional step (a)+(b), a flowrate increased by 100% for sections of the pouring duct 12 lower than 1.8 cm$^2$, and increased up to 150% for the sections of the pouring duct 12 higher than 1.8 cm$^2$ with respect to the flowrate Q1 poured during the initial transitional step (a) and (b).
ii) Set the mixing apparatus in relation to the section or outlet opening condition of the mixing chamber, in conditions of high closure degree ranging from 40% up to 90% as referred to the diameter D1, and set the dosing equipment to increase the flowrate and pour, after the end of the initial transitional step (a)+(b), a flowrate increased by 50% for the sections of the pouring duct 12 lower than 1.8 cm$^2$, increased up to 100% for the sections of the pouring duct 12 higher than 1.8 cm$^2$ with respect to the flowrate Q1 poured during the initial transitional step (a) and (b).

Based on the increased flowrate regime, and the tests carried out, it is again possible to express the flowrate Q according to the cross section Ad of the pouring duct, according to formula 6:

$$6) \quad Q_{MSP} \leq C \cdot Ad + B$$

where

$Q_{MSP}$ - is the pouring flowrate of the initial transitional step, in cm$^3$/sec
C - is the speed coefficient, equal to 152 cm/sec.
Ad - is the cross section of the pouring duct, in cm$^2$
B - is the additional flowrate coefficient, equal to 390 cm$^3$/sec.

Avoiding the formation of spatters of mixture or limiting the smearing distance thereof by operating at low flowrates during an initial transitional step, by forming a pool of mixture with a raised peripheral edge in form of a wave front, suitable to dampen possible spatters, is thus advantageous in terms of substantially improving the production process, reducing wastes as well as substantially reducing times for processing and maintenance and cleaning operations; once the initial transitional step is terminated it will be possible to increase the poured flowrate up until a high regime of flowrate with respect to the initial transitional flowrate, which allow the best conditions for filling a mould cavity, maintaining the flow of mixture being poured in cohesive or laminar conditions; forming splatters of mixture with high flight distances, higher than a specific reference value, can therefore be prevented.

According to the geometrical characteristics, shape and dimensions of the moulding cavity 19 as well as the specific pouring needs of the resulting reactive mixture, it is possible to maintain the high pressure mixing device 10 in a fixed position with respect to the moulding cavity 19, or to generate a relative movement between the mixing device 10 and the impact surface 18 of the moulding cavity 19; this can be for instance obtained by moving the mixing device 10 with respect to the surface 18 of the moulding cavity 19, or vice versa moving the surface 18 of the moulding cavity 19 with respect to the mixing device 10 based on specific kinematic data.

Finally, while pouring the mixture at a increased flowrate, it is possible to modulate and change the poured flowrate, by increasing or reducing the flowrate in a preset way, in relation to the nature and characteristics of the impact surface 18 of the moulding cavity 19, in case the moulding cavity 19 has more or less hollow zones, i.e.

raised parts.

Referring to Figures 13 and 14 the suitable apparatus for carrying out the method according to the invention, and its operation mode will now be described. In Figures 13 and 14 same reference numbers and letters as in the previous figures have again been used, to indicate similar or equivalent parts.

It must be specified that what hereinafter stated in relation to one of the chemical components A, B of the polymeric mixture, for instance for the component A, must be intended also for at least the other component B or for other chemical components of the reactive mixture resulting from mixing.

In figure 13 a control electronic unit CU of a dosing apparatus and high pressure mixing device of a chemically reactive component A and of at least one further chemically reactive component B suitable for forming a polymeric resin of the type initially indicated, is shown.

The control unit CU, in the example shown, consists of a PLC or other type of programmable control unit, operatively connected to electric motors MA, MB driving the dosing pumps PA, PB for at least the components A, B contained in tanks 35A and 35B, which are supplied to the high pressure mixing device 10, with flowrates QA and respectively QB defining the overall flowrate QV=QA+QB poured into the moulding cavity 19.

The control unit CU is also operatively connected to flow transducers FTA and FTB downstream of the respective dosing pumps PA, PB. A first recirculation circuit RCA and RCB allows to recirculate by means of recirculating grooves15', 15" of the valve member 15 (Figure 10), the single chemical components A, B kept under pressure and poured through the injectors 13 and 14, when the sliding valve member 15 is in the advanced or closed position of Figure 10, while the second recirculation circuit RC1, RC2 comprising the respective valves VA, VB allows to recirculate the single components A and B outside the injectors 13 and 14 at a pressure lower than the previous one, during a time lapse comprised between a step of pouring the resulting reactive mixture, and the subsequent pouring step.

As shown in the example of Figure 14, the control unit CU comprises a main programmable controller or control block CM which, duly programmed, predetermines and controls the overall flowrate QV=QA+QB of the mixture to be poured, according to the time T and the operative or logic process of the high pressure mixing apparatus 10, on the impact surface 18 of the moulding cavity 19; furthermore the controller CM predetermines, according to the reaction ratio R= (A/B) of the chemical components A, B, the single flowrates QA and QB in function of the time T.

The control unit CU further comprises, for the components A, B, according to the example shown, auxiliary controllers CA, respectively CB consisting in functional blocks controlling the flowrates QA, QB of the single components A, B to be mixed, in the time ranges T0-T1, T1-T2 and following ones; in alternative, the unit CU is programmable with auxiliary control functions of the flowrates QA and QB, control means of the auxiliary functions of the unit CU or auxiliary controllers CA, CB, thus, by the functional block R=(A/B) for keeping the stoichiometric ratios between the component A and the at least component B, they are operatively connected to the main controller CM.

The control unit CU also handles commands and opening and closing sequences of the members of the high pressure mixing apparatus 10, and of the parts composing the dosing apparatus, as well as the steps of recirculation of the single components A, B.

As schematically indicated in Figure 14, the control means of the auxiliary functions of the unit CU, or the single auxiliary controllers CA, CB are programmed to allow supplying the single polymeric components A and at least B with programmed supply flowrates QA1, QA2 and QB1, QB2, according to a mixing ratio R, depending on the reactive mixture flowrates set in the main controller CM, between the minimum value QA1, QB1 and a maximum value QA2, QB2 in flow conditions (F) of the liquid reactive mixture, without spatters or with spatters having a restrained flight distance, during the previously defined time ranges.

The controller CA or the auxiliary control function of the unit CU outputs a reference signal REFA of the flowrate of the component A, that varies over time and increases according to a law that is pre-set and duly programmed in the control unit; in the specific case the auxiliary controller CA provides simultaneously a further output signal FFA called "feed-forward", that varies over time depending on the same law, suitable to allow for the offset of possible delays in actuating the controlled system, which anticipates the control command of the motor or actuator MA, such to minimise the tracking movement.

Similarly, the at least additional auxiliary controller CB or control function of the control unit CU provides a reference output signal REFB of the flowrate of the at least further chemical reactive component B suitable for forming a polymeric resin, which varies over time according to a pre-set law proportional to that of the reactive chemical component A suitable for forming the polymeric resin, according to the stoichiometric ratio R between the two or more components, duly provided and programmed in the control unit CU, and similarly and simultaneously a further "feed-forward" output signal FFB, variable over time depending on the same law, suitable for allowing the offset of possible delays in actuating the controlled system, anticipating the control command of the motor or actuator MB, such to minimise the tracking error.

From the flowrate reference signal REFA provided by the controller CA, in a first comparison node N1A, it is deducted the feedback signal FRA of the measure of the real flowrate QA of the component A, detected by means of a proper flowrate measuring device consisting of the flow transducer FTA and duly conditioned and digitalised for instance by a pulse/frequency converter 36A, signal corresponding to the flowrate sent from the pump PA to the corresponding injector 13 of the mixing device 10.

In particular the ERRA signal deriving from the deduction comparison between REFA and FRA in the comparison node N1A, is in turn summed in a second node N2A with the advance or feed-forward control signal FFA provided by the controller CA or by the control function of the unit CU, which corresponds to the flowrate that varies over time of the component A to be poured by the pump PA and which takes into account also actuation errors or delays that can occur during the transitional steps for example of a small flowrate percentage that can accumulate in the tubes due to the elasticity thereof, and also of the acceleration delays that the frequency variator system and electric motor introduce due to the torque increase to be provided by the motor.

Similarly, the control unit CU provides to manage the corresponding references REFB keeping them proportional according to the respective stoichiometric ratio R with the component A and to compare them with the feedback signals FRB provided by the frequency converter 36B operatively connected to the flow transducer FTC of the at least reactive chemical component B suitable for forming the polymeric resin, in the node N1B (and, if necessary of further chemical components), and further provides to send to at least a further node N2B a feed-forward signal FFB to offset the respective actuation delays.

Always in relation to the component A, the signal RVA deriving from the sum comparison between the ERRA and FFA signals in the second node N2A, is duly converted into a frequency reference and sent for instance to the command input of the frequency converter or inverter 37A which commands and controls the revolution speed of the electric motor MA when the latter is of the alternating current type; or it may be converted into a speed reference signal for actuating for example a direct current motor, or a brushless motor, as the motors are already provided with a revolution speed detector for direct current motors and of rotational angle and relative speed for brushless motors, whose actuation are already provided.

Similarly the further at least controller CB or control function of the control unit CU provides to convert the frequency reference signal RVB for the frequency converter 37B of the alternating current motor MB associated to the pump PB of the reactive chemical component B suitable to form the polymeric resin, or the speed reference signal of the direct current or brushless motor or motors associated to the pumps of the other polymeric components, keeping them proportional according to the respective stoichiometric ratio of the component A.

To complete what previously described referring to Figure 14, with said closed valves VA, VB, the at least two polymeric components A, B are supplied in a metered and controlled way according to the previously described diagram, in a stoichiometric ratio, towards the respective injectors 13, 14 which adjust the pressure on the delivery line of the pump PA, PB and transform the pressure energy into the kinetic energy of the jets.

The components A, B or possibly other components, are recirculated towards respective tanks 35A and 35B keeping the components A, B separate when the valve member 15 of the mixing device 10 are in the advanced or closed position. When the valve member 15 is moved backwards opening the mixing chamber 11, the two or more jets collide one against the other and against the walls inside mixing chamber 11 thoroughly mixing due to the high turbulence resulting from the jet collision, forming the reacting mixture which flows out of the pouring duct 12 through the opening 11' of the mixing chamber 11.

In the pouring duct 12 the turbulence of the mixture is reduced also thanks to the proper setting of the restriction of the opening 11' of the mixing chamber 11, caused by the front end of the self-cleaning member 25 stopped at the opening, such to reduce the outlet 11' from the mixing chamber 11 of a preset value. The reacting mixture then flows out through the pouring duct 12 to be poured in the described modes on the surface 18 of the open moulding cavity 19.

Referring to the example of Figures 13 and 14, the operative mode of the apparatus will now be described in greater detail in case the flowrates of the at least two components A and B, consequently the flowrate and pouring speed of the resulting polymeric mixture poured on the surface 18 of the moulding cavity 19, vary from an initial minimum value, which impacting against the surface 18 of the moulding cavity 19 does not form spatters of mixture, or forms spatters with a tolerable flight distance, and later increases with a ramp, as shown in figure 14, up to a maximum value of increased flowrate, maintaining possible spatters within a tolerable limit.

In particular in Figure 14 the control functional blocks, indicating the controllers CA, CB or control functions of the unit CU, in the example taken into consideration show a graph of the variation of flowrates QA and at least QB of the two polymeric components A and B, and consequently of the flowrate of the resulting reactive mixture QV, according to the pouring time T, consequently the variation of the speed of the jet of mixture poured on the inner surface 18 of the open moulding cavity 19.

By a suitable user interface, for instance a keyboard, not shown, an operator programmes the control unit CU with the law of variation over time of the total massive flowrate of reacting mixture QV, and the total amounts which must be poured in each pouring step, with the percentage stoichiometric ratio or the massive flowrate ratio of each component A and at least B, forming the reacting mixture; the operator also programmes the amount of reacting mixture to be poured at each step, namely at the step corresponding to the initial constant flowrate transitional step, and later at the regime step, including the increasing flowrate ramp.

The variation law of the mixture flowrate may be expressed in any suitable way, by planes, ramps or other exponential functions, or point variation of the total flowrate which the control unit CU will relate to the specific amounts to be poured in a controlled way, as described.

It is further provided to program the desired reaction ratio between the different polymeric components which is to be maintained constant during the entire pouring step of the mixture, regardless of flowrate variations.

According to the example of figure 14, the flowrates QA, QB of the chemical components A and at least B in the range T0-T2, vary therefore from a first initial flowrate QA1 and QB1, to a pre-set regime flowrate QA2 and QB2 that is higher than the previous one, increasing according to a linear or exponential law. In particular the flowrates of the polymeric components A and B and of the resulting mixture, from the instant T0 in which the mixing device 10 is opened, are kept constant between T0 and T1 to values QA1, QB1 according to the set value, such to pour a total amount suitable for forming the pool of mixture PZ2 without spatters or with a restricted flight distance, as previously mentioned.

Thereafter the flowrates vary with increasing values depending on the ratio set in the time range set between T1 and T2, to flowrates QA2, QB2; thereafter they are kept constant or are varied in a controlled way in the time range between the instant T2 and the instant of closure of the mixing apparatus 10, such to pour the total amount of programmed mixture.

**Claims**

1. A method for pouring, in a free spatter condition or with spatters having a restrained flight distance (FD), a flow (F) of a liquid mixture of a first (A) and at least a second (B) chemically reactive component suitable for forming a polymeric resin, in an open moulding cavity (19) or a shell to be filled with foam, having a bottom surface (18) and a peripheral edge (21), and by a high pressure mixing device (10) comprising a mixing chamber (11) that communicates with a pouring duct (12) having an inner diameter (D2),

    said pouring duct (12) being orthogonally oriented with respect to the mixing chamber; wherein the high pressure mixing device (10) is configured to pour a controlled flowrate with a regime value (Q2), and is operatively connected to a programmable control apparatus, said method comprising the steps of:

        pouring, during an initial transitional step, a flow (F) of reactive liquid mixture with a reduced pouring flowrate (Q1) that is comparatively less than a regime flowrate (Q2) of the high pressure mixing device (10), orienting the flow (F) of reactive liquid mixture towards an impact point or zone (P), forming a pool of mixture on the bottom surface (18) of the open moulding cavity (19),

**CHARACTERIZED BY** THE STEPS OF:

        controlling a flowrate (QV) of the reactive liquid mixture in function of a pouring time (T) and in function of a process logic of the high pressure mixing device (10);
        providing, for each reactive chemically component (A, B), a first reference signal (REFA, REFB) of the flowrate that is variable over time (T);
        providing, for each reactive chemically component (A, B), a second signal (FFA, FFB) in feed-forward mode and in an error control loop, in feedback, of a signal (FRA, FRB) of a flow transducer (FTA, FTB) positioned downstream of a supply pump (PA, PB);
        pouring, during the initial transitional step, a flow (F) of reactive liquid mixture with the reduced flowrate (Q1) maintaining flow pouring conditions which, upon impact with the surface (18) of the moulding cavity (19), do not form spatters or form spatters having a restrained flight distance (FD) lower than the distance between the impact point or zone (P) and a zone closer to said peripheral edge (21) of said cavity (19), or of said shell, or of a specific zone of said open moulding cavity (19) wherein an insert or a partition or a wall protruding upwards is provided, forming in a first step an initial pool of mixture (PZ1) having an irregular edge;
        pouring, in the initial transitional step, into the initial pool of mixture (PZ1) a metered quantity of a reactive liquid mixture, always maintaining a reduced pouring flowrate (Q1) and pouring conditions which do not generate spatters, or generate spatters having a restrained flight distance (FD), forming a subsequent second pool (PZ2) of greater sizes or larger than said first initial pool (PZ1) of reactive liquid mixture, wherein the second pool (PZ2) is configured with a raised peripheral edge, in the form of a wave front (FO) having a wave peak (PC) with a height (H) greater than the thickness (S2) of an inner zone delimited by said raised peripheral edge of said subsequent second pool of mixture (PZ2), and having a width (DP) that is about equal to three or four times greater the inner diameter (D2) of the pouring duct (12); increase the pouring of the reactive liquid mixture towards said subsequent second larger pool (PZ2), after the initial transitional step, up to the regime flowrate (Q2); and

maintaining, for the reactive mixture flowing out of the pouring duct (12) with inner diameter (D2), cohesive flow conditions, in which conditions said reactive mixture, once initially filled-in said pouring duct (12), flows out of said pouring duct (12) without vein separations, but with possible inner motions transversal to the same flow, however contained within the jet with a vein substantially parallel to the path of the flow (F), or it flows out in a laminar flow condition, without possible inner motions traversal to the flow, and with speed parallel to the direction of said flow (F); the pouring duct having a cross section comprised between 0.5 $cm^2$ and 8 $cm^2$.

2. The method for pouring the reactive mixture according to claim 1, **characterized by** generating a relative movement between the pouring duct (12) of the high pressure mixing device (10) and the bottom surface (18) of the open moulding cavity (19).

3. The method for pouring the liquid reactive mixture according to any one of the preceding claims, **characterized by** pouring the flow (F) of reactive mixture at a pouring speed (V) related to the flowrates (Q1, Q2) of the poured reactive mixture and to the inner diameter (D2) of the pouring duct (12), during transitional and regime flowrate steps (Q1, Q2), and wherein the regime flowrate (Q2) of the reactive mixture, poured after the initial transitional step, is varied at a specific zone (I) of the open moulding cavity (19) or of the shell where an insert or a partition or a wall protruding upwards is provided.

4. The method for pouring a reactive polyurethane mixture according to one or more of the preceding claims, wherein the mixing chamber (11) is configured with an outlet opening (11') having a diameter (D1), in which, during the initial transitional step, the flowrate (Q1) of reactive mixture is poured on the basis of the following general formula 1:

$$1)\ Q = C \cdot Ad + B$$

where

Q - is the pouring flowrate during the initial transitional step, in $cm^3/sec$, in the absence of spatters or with spatters having a restrained flight distance;
Ad - is the cross section of the pouring duct (12), comprised between 0.5 and 8 $cm^2$;
C - is an average speed coefficient of the poured flow, having a value comprised between 1 and 95 cm/sec;
B - is an additional base flowrate coefficient in $cm^3/sec$. deriving from a linear interpolation of the poured flowrates (Q) for different values of the diameter (D2) of the pouring duct (12), in conditions without spatters or with spatters having a restrained flight distance and having a value comprised between 20 and 420 $cm^3/sec$.

5. The method for pouring the reactive polyurethane mixture according to claim 4, **characterized by** partially closing the outlet opening (11') of the mixing chamber (11) with a partial closure degree expressed as a percentage of the diameter (D1) of the mixing chamber (11), wherein it is provided reducing the outlet opening (11') of the mixing chamber (11) having a partial closure degree comprised between 0% and 40%, on the basis of the following formula 2:

$$2)\qquad Q_{oo} = C_o \cdot Ad + B_o$$

where

Qoo - is the pouring flowrate, during the initial transitional step, which does not produce spatters ("zero-spatter" condition), in $cm^3/sec$;
Ad - is the cross section of the pouring duct, in $cm^2$;
$C_o$ - is the speed coefficient of the flow poured in the absence of spatters, comprised between 1 and 50 cm/sec;
$B_o$ - is the base flowrate coefficient comprised between 20 and 250 $cm^3/sec$.

6. The method for pouring the reactive polyurethane mixture according to claim 4, **characterized by** partially closing the outlet opening (11') of the mixing chamber (11) with a partial closure degree expressed as a percentage of the diameter (D1) of the mixing chamber (11), wherein it is provided partially closing the outlet opening (11') with a high partial closure degree greater than the 40% of the diameter (D1) of the mixing chamber (11);
wherein during the initial transitional step the mixing flowrate (Q1) is poured on the basis of the following formula 3:

$$3)\ Q_{op}= C_1 \cdot Ad + B_1$$

where

Q_{op} - is the pouring flowrate, during the initial transitional step, which does not produce spatters ("zero-spatter" condition), in $cm^3/sec$, with a high partial closure;

Ad - is the cross section of the pouring duct, in $cm^2$;

$C_1$- is the speed coefficient of the flow, comprised between 1 and 50 cm/sec; $B_1$ - is the base flowrate coefficient comprised between 20 and 300 $cm^3/sec$.

7. The method for pouring the reactive polyurethane mixture according to claim 4 generating spatters having a flight distance (FD) from the impact zone (P), equal to or lower than a specific reference distance, **characterized by** partially closing the outlet opening (11') of the mixing chamber (11) with a partial closure degree expressed as a percentage of the diameter (D1) of the mixing chamber (11), wherein it is provided to partially close the outlet opening (11') of the mixing chamber (11) with a lower partial closure degree comprised between 0% and 40% of the diameter (D1) of the mixing chamber (11); and wherein during the initial transitional step the mixing flowrate (Q1) is poured on the basis of the following formula 4:

$$4)\ Q_{Iso}= C_2 \cdot Ad + B_2$$

where

Q_{Iso} - is the pouring flowrate during the initial transitional step which produces mixture spatters with a flight distance (DF) from the impact zone (P), equal to or lower than a specific reference distance, expressed in $cm^3/sec$;

Ad - is the cross section of the pouring (12) duct, in $cm^2$;

$C_2$- is the speed coefficient of the flow comprised between 50 and 90 cm/sec;

$B_2$ - is the base flowrate coefficient comprised between 200 and 350 $cm^3/sec$.

8. The method for pouring the reactive polyurethane mixture according to claim 4, **characterized by** partially closing the outlet opening (11') of the mixing chamber (11) with a partial closure degree expressed as a percentage of the diameter (D1) of the mixing chamber (11), wherein it is provided to partially close the outlet opening (11') of the mixing chamber (11) with a partial closure degree higher than 40% of the diameter (D1) of the mixing chamber (11); and
wherein during the initial transitional step the mixing flowrate (Q1) is poured on the basis of the following formula 5:

$$5)\ Q_{Isp}= C_3 \cdot Ad + B_3$$

where

Q_{Iso} - is the pouring flowrate during the initial transitional step which produces mixture spatters having a flight distance (DF) from the impact zone (P), equal to or lower than a specific reference distance, expressed in $cm^3/sec$;

Ad- the cross section of the pouring duct, in $cm^2$;

$C_3$- is the speed coefficient of the flow ranging between 50 and 95 cm/sec;

$B_3$ - is the base flowrate coefficient ranging between 250 and 420 $cm^3/sec$.

9. The method for pouring the reactive polyurethane mixture according to any one of claims 4 to 8 wherein the numerical values of the speed coefficients (C) and base flowrate (B) coefficients increase as the partial closure degree of the outlet opening (11') of the mixing chamber (11) increases.

10. The method for pouring the reactive polyurethane mixture according to claim 4, wherein, following the initial pouring transitional step, with the outlet opening (11') of the mixing chamber (11) partially closed up to 40%, included, the flowrate of reactive mixture is increased up to 100% for sections of the pouring duct (12) below 1.8 $cm^2$ , included, and can be respectively increased up to 150% for sections of the pouring duct above 1.8 $cm^2$, with respect to the initial pouring flowrate (Q1).

11. The method for pouring the reactive polyurethane mixture according to claim 4 in which, following the initial pouring transitional step, with the opening (11') of the mixing chamber (11) having been partially closed above 40%, the flowrate of reactive mixture is increased up to 50%, regime operative conditions successive the initial transitional step, for sections of the pouring duct (12) equal to or less than 1.8 $cm^2$, and can be respectively increased up to 100% for the regime operative conditions during the entire pouring after the initial transitional step for sections of the pouring duct (12) greater than 1.8 $cm^2$ with respect to the initial pouring flowrate (Q1).

12. The method for pouring the reactive polyurethane mixture according to claim 4, in which after the initial transitional step the flowrate (Q1) of reactive mixture is increased during the entire regime operative pouring condition successive the initial transitional step, on the basis of the following formula 6:

$$6)\ Q_{MSP} \leq C \cdot Ad + B$$

where

Q_{MSP} - is the pouring flowrate of the initial transitional step, in $cm^3/sec$
C - is the speed coefficient, equal to 152 cm/sec.
Ad - is the cross section of the pouring duct, in $cm^2$
B - is the additional base flowrate coefficient, equal to 390 $cm^3/sec$.

13. The method for pouring the reactive mixture according to claim 1, wherein the width (DP) of the successive second pool of reactive mixture (PZ2) is comprised between 3 and 6 times the diameter (D2) of the pouring duct (12), or higher, with the width (DP) value of the second pool (PZ2) which decreases as the viscosity of the reactive mixture decreases.

14. An apparatus suitable for pouring, in a condition without spatters or with spatters having a restrained flight distance (FD) which is contained within an open moulding cavity or in a shell (19), a flow (F) of a chemically reactive liquid mixture of a first (A) and of at least a second (B) chemically reactive component that are suitable for forming a polymer resin, in said open moulding cavity or in said shell (19) to be filled with foam, having a bottom surface (18), according to the method of one or more preceding claims, wherein the apparatus comprises:

a high pressure mixing device (10) comprising a mixing chamber (11) extending in an axial direction and communicating with a pouring duct (12) orthogonally oriented with respect to said axial direction of said mixing chamber (11), wherein the high pressure mixing apparatus (10) is configured with the pouring duct (12) having an inner diameter (D2) and a cross section comprised between 0.5 and 8 $cm^2$,
said high pressure mixing device (10) being operatively connected to a dosing apparatus (PA, PB; FTA, FTB) configured for mixing and pouring a flow (F) of reactive liquid mixture in an impact point or zone (P) of the open moulding cavity or shell (19) to be filled with foam;
wherein the high pressure mixing device (10) and the dosing apparatus (PA, PB; FTA, FTB) are operatively connected to a programmable control unit (CU), said programmable control unit (CU) comprising a main controller (CM) for controlling the flowrate (QV) of the reactive liquid mixture to be poured in function of the pouring time (T), and a process logic of the high pressure mixing apparatus (10); said programmable control unit (U), for each reactive chemical component (A, B), comprising auxiliary controllers (CA, CB) programmed to provide a first reference signal (REFA, REFB) of the flowrate that is variable over time (T), the flowrate being programmed by the main controller (CM), and to provide a second signal (FFA, FFB) in feed-forward mode and in an error control loop, in feedback, of a signal (FRA, FRB) of a flow transducer (FTA, FTB) positioned downstream of a supply pump (PA, PB);
said programmable control unit (CU) comprising control means for the flowrate (Q1, Q2) of the reactive liquid mixture poured into the open moulding cavity, configured for measuring, mixing and pouring in a first step a metered quantity of mixture with an initial transitional flowrate (Q1) that is less than a successive regime flowrate condition (Q2), in which the initial transitional flowrate (Q1) is programmed and controlled to a value such as to form in the initial transitional step, a first mixture pool (PZ1) with an irregular edge of reactive liquid mixture on said bottom surface (18), in absence of spatters or with spatters having a restrained flight distance (FD), and to form a second successive pool of reactive mixture (PZ2) having a width (DP) about equal to or larger than three or four times said inner diameter (D2) of the pouring duct (12), and having a raised peripheral edge in the shape of a wave front (FO) having a wave peak (PC) with a height (H) greater than the thickness (S2) of an inner zone of said second pool of mixture (PZ2), in the absence of spatters or with spatters having a restrained flight distance (FD) which is contained within said open moulding cavity or in said shell (19), said flowrate (Q1, Q2) control means being configured to increase, successively the transitional step, the pouring of the reactive liquid mixture towards said subsequent larger pool (PZ2), until the regime operative flowrate (Q2), maintaining pouring conditions of a cohesive or laminar flow (F), and regime pouring conditions of the flow (F) of reactive liquid mixture such not to produce spatters (SP) or produce spatters having a restrained flight distance (FD) lower than the distance between the impact point or zone (P) and said peripheral edge (21) or of a part (I) of said open moulding cavity (19) or shell to be filled with foam in which an insert or partition or wall protruding upwards is provided.

15. The apparatus according to claim 14, wherein said means for controlling the reactive liquid mixture flowrates, comprise a control function (CM) of the total flowrate (QV) and a control function of the flowrates of the single reactive chemical components (A, B), programmed in the control unit (CU), to be poured, in function of their reaction time and pouring time (T).

16. The apparatus according to claim 14, comprising a throttling and partial closure member (25, 26) of an outlet opening (11') of the mixing chamber (11) communicating with the pouring duct (12), and an adjustable member (28) for stopping the throttling member (25, 26) in a partially closed condition of the outlet opening (11') of the mixing chamber (11).

17. The apparatus for pouring the chemically reactive mixture according to claim 14, wherein the control function or the flowrate controllers (CA, CB) of the polymeric components (A, B) are programmed to change the flowrate (Q2) of the reactive chemical mixture during the entire regime operative pouring conditions successive an initial transitional step.

## Patentansprüche

1. Verfahren zum Gießen, in einem freien Spritzerzustand oder mit Spritzern mit einer begrenzten Flugdistanz (FD), eines Stroms (F) einer flüssigen Mischung aus einer ersten (A) und mindestens einer zweiten (B) chemisch reaktiven Komponente, die zur Bildung eines Polymerharzes geeignet ist, in einen offenen Formhohlraum (19) oder eine mit Schaum zu füllende Schale mit einer Bodenfläche (18) und einer Umfangskante (21), und mittels einer Hochdruckmischvorrichtung (10), die eine Mischkammer (11) umfasst, die mit einem Gießkanal (12) mit einem Innendurchmesser (D2) kommuniziert, wobei

der Gießkanal (12) orthogonal zur Mischkammer ausgerichtet ist;
wobei die Hochdruckmischvorrichtung (10) konfiguriert ist, um eine kontrollierte Durchflussrate mit einem Betriebswert (Q2) auszugießen, und betriebsmäßig mit einer programmierbaren Steuereinrichtung verbunden ist, wobei das Verfahren die folgenden Schritte umfasst:

Gießen, während eines anfänglichen Übergangsschritts, eines Stroms (F) einer reaktiven Flüssigkeitsmischung mit einer reduzierten Gießdurchflussrate (Q1), die vergleichsweise geringer ist als eine Betriebsdurchflussrate (Q2) der Hochdruckmischvorrichtung (10), Richten des Stroms (F) der reaktiven Flüssigkeitsmischung auf einen Auftreffpunkt oder -bereich (P), wodurch ein Gemischpool auf der Bodenfläche (18) des offenen Formhohlraums (19) gebildet wird,

GEKENNZEICHNET DURCH FOLGENDE SCHRITTE:

Steuern einer Durchflussrate (QV) der reaktiven Flüssigkeitsmischung in Abhängigkeit von einer Gießzeit (T) und in Abhängigkeit von einer Prozesslogik der Hochdruckmischvorrichtung (10);
Bereitstellen eines ersten Referenzsignals (REFA, REFB) der Durchflussrate für jede reaktive chemische Komponente (A, B), das über die Zeit (T) variabel ist;
Bereitstellen eines zweiten Signals (FFA, FFB) für jede reaktive chemische Komponente (A, B) im Vorwärtskopplungsmodus und in einer Fehlerregelschleife als Rückkopplung eines Signals (FRA, FRB) eines Durchflusswandlers (FTA, FTB), der stromabwärts einer Versorgungspumpe (PA, PB) positioniert ist;
Gießen eines Stroms (F) aus reaktivem Flüssigkeitsgemisch mit verringerter Durchflussrate (Q1) während des anfänglichen Übergangsschritts, wobei Durchflussgießbedingungen aufrechterhalten werden, die beim Auftreffen auf die Oberfläche (18) des Formhohlraums (19) keine Spritzer bilden oder Spritzer bilden, deren begrenzte Flugdistanz (FD) geringer ist als die Distanz zwischen dem Auftreffpunkt oder -bereich (P) und einem Bereich näher an der Umfangskante (21) des Hohlraums (19) oder der Schale oder einem bestimmten Bereich des offenen Formhohlraums (19), in dem ein Einsatz oder eine Trennwand oder eine nach oben ragende Wand vorgesehen ist, wodurch in einem ersten Schritt ein anfänglicher Gemischpool (PZ1) mit unregelmäßigem Rand gebildet wird;
Gießen einer dosierten Menge eines reaktiven Flüssigkeitsgemischs in den anfänglichen Gemischpool (PZ1) im ersten Übergangsschritt, wobei stets eine reduzierte Gießdurchflussrate (Q1) und Gießbedingungen aufrechterhalten werden, die keine Spritzer erzeugen oder Spritzer mit einer begrenzten Flugdistanz (FD) erzeugen, wodurch ein nachfolgender zweiter Pool (PZ2) mit größeren Abmessungen oder größer als der erste anfängliche Pool (PZ1) aus reaktivem Flüssigkeitsgemisch gebildet wird, wobei der zweite Pool (PZ2) mit einem erhöhten Umfangsrand in Form einer Wellenfront (FO) konfiguriert ist, die einen Wellenberg (PC) mit einer Höhe (H) aufweist, die größer ist als die Dicke (S2) eines inneren Bereichs, der durch den erhöhten Umfangsrand des nachfolgenden zweiten Gemischpools (PZ2) begrenzt wird, und eine Breite (DP) aufweist, die etwa drei- oder viermal größer als der Innendurchmesser (D2) des Gießkanals (12) ist;

Erhöhen des Einströmens der reaktiven Flüssigkeitsmischung nach dem ersten Übergangsschritt in Richtung des nachfolgenden zweiten größeren Beckens (PZ2) bis zur Betriebsdurchflussrate (Q2); und

Aufrechterhalten von kohäsiven Durchflussbedingungen für das aus dem Gießkanal (12) mit Innendurchmesser (D2) ausströmende reaktive Gemisch, wobei das reaktive Gemisch, nachdem es zunächst in den Gießkanal (12) eingefüllt wurde, ohne Strömungsablösungen, aber mit möglichen inneren Bewegungen quer zum Strom aus dem Gießkanal (12) ausströmt, jedoch innerhalb des Strahls mit einer Strömung im Wesentlichen parallel zur Strömungsrichtung (F) enthalten ist, oder es strömt in einem laminaren Strömungszustand aus, ohne mögliche innere Bewegungen quer zum Strom und mit einer Geschwindigkeit parallel zur Richtung des Stroms (F); wobei der Gießkanal einen Querschnitt zwischen 0,5 cm$^2$ und 8 cm$^2$ aufweist.

2. Verfahren zum Gießen der reaktiven Mischung nach Anspruch 1, **gekennzeichnet durch** Erzeugen einer Relativbewegung zwischen dem Gießkanal (12) der Hochdruckmischvorrichtung (10) und der Bodenfläche (18) des offenen Formhohlraums (19).

3. Verfahren zum Gießen der flüssigen reaktiven Mischung nach einem der vorhergehenden Ansprüche, **gekennzeichnet durch** Gießen des Stroms (F) der reaktiven Mischung mit einer Gießgeschwindigkeit (V), die in Bezug zu den Durchflussraten (Q1, Q2) der gegossenen reaktiven Mischung und zum Innendurchmesser (D2) des Gießkanals (12) steht, während der Übergangs- und Betriebsdurchflussschritte (Q1, Q2), und wobei die Betriebsdurchflussrate (Q2) der reaktiven Mischung, die nach dem anfänglichen Übergangsschritt gegossen wird, in einem bestimmten Bereich (I) des offenen Formhohlraums (19) oder der Schale variiert wird, wo ein Einsatz oder eine Trennwand oder eine nach oben ragende Wand vorgesehen ist.

4. Verfahren zum Gießen einer reaktiven Polyurethanmischung nach einem oder mehreren der vorstehenden Ansprüche, wobei die Mischkammer (11) mit einer Auslassöffnung (11') mit einem Durchmesser (D1) konfiguriert ist, in die während des anfänglichen Übergangsschritts die Durchflussrate (Q1) der reaktiven Mischung auf der Grundlage der folgenden allgemeinen Formel 1 gegossen wird:

$$1) \qquad Q = C \cdot Ad + B$$

wobei

Q - die Gießdurchflussrate während des ersten Übergangsschritts in cm$^3$/s ist, wenn keine Spritzer vorhanden sind oder die Spritzer eine begrenzte Flugdistanz haben;
Ad - der Querschnitt des Gießkanals (12) ist, der zwischen 0,5 und 8 cm$^2$ liegt;
C - ein durchschnittlicher Geschwindigkeitskoeffizient des gegossenen Flusses mit einem Wert zwischen 1 und 95 cm/s ist;
B - ein zusätzlicher Basisdurchflusskoeffizient in cm$^3$/s ist, abgeleitet aus einer linearen Interpolation der gegossenen Durchflussraten (Q) für verschiedene Werte des Durchmessers (D2) des Gießkanals (12), unter Bedingungen ohne Spritzer oder mit Spritzern mit begrenzter Flugdistanz und einem Wert zwischen 20 und 420 cm$^3$/s.

5. Verfahren zum Gießen der reaktiven Polyurethanmischung nach Anspruch 4, **gekennzeichnet durch** teilweises Verschließen der Auslassöffnung (11') der Mischkammer (11) mit einem Teilschließungsgrad, der als Prozentsatz des Durchmessers (D1) der Mischkammer (11) ausgedrückt wird, wobei vorgesehen ist, die Auslassöffnung (11') der Mischkammer (11) auf einen Teilschließungsgrad zwischen 0 % und 40 % zu verkleinern, und zwar auf der Grundlage der folgenden Formel 2:

$$2) \qquad Q_{oo} = C_o \cdot Ad + B_o$$

wobei

Qoo - die Gießdurchflussrate während des anfänglichen Übergangsschritts ist, bei dem keine Spritzer entstehen (Zustand "Nullspritzer"), in cm$^3$/s;
Ad - der Querschnitt des Gießkanals in cm$^2$ ist;
$C_o$ - der Geschwindigkeitskoeffizient des gegossenen Stroms ohne Spritzer ist, der zwischen 1 und 50 cm/s liegt;

$B_o$ - der Basisdurchflusskoeffizient ist, der zwischen 20 und 250 cm³/s liegt.

6. Verfahren zum Gießen der reaktiven Polyurethanmischung nach Anspruch 4, **gekennzeichnet durch** teilweises Verschließen der Auslassöffnung (11') der Mischkammer (11) mit einem Teilschließungsgrad, der als Prozentsatz des Durchmessers (D1) der Mischkammer (11) ausgedrückt wird, wobei ein teilweises Verschließen der Auslassöffnung (11') mit einem hohen Teilschließungsgrad von mehr als 40 % des Durchmessers (D1) der Mischkammer (11) vorgesehen ist;

wobei während des anfänglichen Übergangsschritts die Mischdurchflussrate (Q1) auf der Grundlage der folgenden Formel 3 eingefüllt wird:

$$3) \quad Q_{op}=C_1 \cdot Ad+B_1$$

wobei

$Q_{op}$ - die Gießdurchflussrate während des anfänglichen Übergangsschritts ist, bei dem keine Spritzer entstehen (Zustand "Nullspritzer"), in cm³/s, mit einem hohen Teilverschluss;
Ad - der Querschnitt des Gießkanals in cm² ist;
$C_1$ - der Geschwindigkeitskoeffizient der Strömung ist, der zwischen 1 und 50 cm/s liegt;
$B_1$ - der Basisdurchflusskoeffizient ist, der zwischen 20 und 300 cm³/s liegt.

7. Verfahren zum Gießen der reaktiven Polyurethanmischung nach Anspruch 4, wobei Spritzer erzeugt werden, die eine Flugdistanz (FD) von dem Auftreffbereich (P) aufweisen, die gleich oder kleiner als eine bestimmte Referenzdistanz ist, **gekennzeichnet durch** teilweises Verschließen der Auslassöffnung (11') der Mischkammer (11) mit einem Teilverschlussgrad, der als Prozentsatz des Durchmessers (D1) der Mischkammer (11) ausgedrückt wird, wobei vorgesehen ist, die Auslassöffnung (11') der Mischkammer (11) mit einem geringeren Teilverschlussgrad teilweise zu verschließen, der zwischen 0 % und 40 % des Durchmessers (D1) der Mischkammer (11) liegt; und

wobei während des anfänglichen Übergangsschritts die Mischdurchflussrate (Q1) auf der Grundlage der folgenden Formel 4 eingefüllt wird:

$$4) \quad Q_{1so}=C_2 \cdot Ad+B_2$$

wobei

$Q_{1so}$ - die Gießdurchflussrate während des ersten Übergangsschritts ist, bei der Spritzer der Mischung mit einer Flugdistanz (DF) von dem Auftreffbereich (P) entstehen, die gleich oder kleiner als eine bestimmte Referenzdistanz ist, ausgedrückt in cm³/s;
Ad - der Querschnitt des Gießkanals (12) in cm² ist;
$C_2$ - der Geschwindigkeitskoeffizient der Strömung ist, der zwischen 50 und 90 cm/s liegt;
$B_2$ - der Basisdurchflusskoeffizient ist, der zwischen 200 und 350 cm³/s liegt.

8. Verfahren zum Gießen der reaktiven Polyurethanmischung nach Anspruch 4, **gekennzeichnet durch** teilweises Verschließen der Auslassöffnung (11') der Mischkammer (11) mit einem Teilverschlussgrad, der als Prozentsatz des Durchmessers (D1) der Mischkammer (11) ausgedrückt wird, wobei vorgesehen ist, die Auslassöffnung (11') der Mischkammer (11) mit einem Teilverschlussgrad von mehr als 40 % des Durchmessers (D1) der Mischkammer (11) teilweise zu verschließen; und

wobei während des anfänglichen Übergangsschritts die Mischdurchflussrate (Q1) auf der Grundlage der folgenden Formel 5 eingefüllt wird:

$$5) \quad Q_{1sp}=C_3 \cdot Ad+B_3$$

wobei

$Q_{1so}$ - die Gießdurchflussrate während des ersten Übergangsschritts ist, bei der Spritzer der Mischung mit einer Flugdistanz (DF) von dem Auftreffbereich (P) entstehen, die gleich oder kleiner als eine bestimmte Referenzdistanz ist, ausgedrückt in cm³/s;
Ad - der Querschnitt des Gießkanals in cm²;
$C_3$ - der Geschwindigkeitskoeffizient der Strömung ist, der zwischen 50 und 95 cm/s beträgt;
$B_3$ - der Basisdurchflusskoeffizient ist, der zwischen 250 und 420 cm³/s beträgt.

9. Verfahren zum Gießen der reaktiven Polyurethanmischung nach einem der Ansprüche 4 bis 8, wobei die numerischen Werte der Geschwindigkeitskoeffizienten (C) und der Basisdurchflusskoeffizienten (B) mit zunehmendem Grad der teilweisen Schließung der Auslassöffnung (11') der Mischkammer (11) zunehmen.

10. Verfahren zum Gießen der reaktiven Polyurethanmischung nach Anspruch 4, wobei nach dem anfänglichen Gießübergangsschritt, bei dem die Auslassöffnung (11') der Mischkammer (11) teilweise bis zu 40 % geschlossen ist, die Durchflussrate der reaktiven Mischung für Abschnitte des Gießkanals (12) unter 1,8 cm² bis zu 100 % erhöht wird, enthalten und können für Abschnitte des Gießkanals über 1,8 cm² jeweils bis zu 150 % erhöht werden, in Bezug auf die anfängliche Gießdurchflussrate (Q1).

11. Verfahren zum Gießen der reaktiven Polyurethanmischung nach Anspruch 4, bei dem nach dem anfänglichen Gießübergangsschritt, bei dem die Öffnung (11') der Mischkammer (11) teilweise über 40 % geschlossen ist, die Durchflussrate der reaktiven Mischung auf bis zu 50 % erhöht wird, Betriebsbedingungen nach dem anfänglichen Übergangsschritt für Abschnitte des Gießkanals (12) gleich oder kleiner als 1,8 cm$^2$, und für die Betriebsbedingungen während des gesamten Gießens nach dem ersten Übergangsschritt für Abschnitte des Gießkanals (12) größer als 1,8 cm$^2$ jeweils bis zu 100 % erhöht werden kann in Bezug auf die anfängliche Gießdurchflussrate (Q1).

12. Verfahren zum Gießen der reaktiven Polyurethanmischung nach Anspruch 4, bei dem nach dem anfänglichen Übergangsschritt die Fließrate (Q1) der reaktiven Mischung während des gesamten Betriebszustands des Gießens nach dem anfänglichen Übergangsschritt auf der Grundlage der folgenden Formel 6 erhöht wird:

$$6) \quad Q_{MSP} \leq C \cdot Ad + B$$

wobei

$Q_{MSP}$ - die Gießdurchflussrate der ersten Übergangsstufe in cm$^3$/s ist.
C - der Geschwindigkeitskoeffizient ist, der gleich 152 cm/s ist.
Ad - der Querschnitt des Gießkanals in cm$^2$ ist.
B - der zusätzliche Basisdurchflusskoeffizient ist, der gleich 390 cm$^3$/s ist.

13. Verfahren zum Gießen der reaktiven Mischung nach Anspruch 1, wobei die Breite (DP) des nachfolgenden zweiten Pools der reaktiven Mischung (PZ2) zwischen dem 3- und 6-fachen des Durchmessers (D2) des Gießkanals (12) oder mehr liegt, wobei der Breitenwert (DP) des zweiten Pools (PZ2) mit abnehmender Viskosität der reaktiven Mischung abnimmt.

14. Einrichtung, die geeignet ist, um in einem Zustand ohne Spritzer oder mit Spritzern mit einer begrenzten Flugdistanz (FD), die in einem offenen Formhohlraum oder in einer Schale (19) enthalten ist, einen Strom (F) einer chemisch reaktiven Flüssigkeitsmischung aus einer ersten (A) und mindestens einer zweiten (B) chemisch reaktiven Komponente, die zur Bildung eines Polymerharzes geeignet sind, in den offenen Formhohlraum oder in die Schale (19) zu gießen, um sie mit Schaum zu füllen, und die eine Bodenfläche (18) aufweist, nach dem Verfahren eines oder mehrerer der vorstehenden Ansprüche, wobei die Einrichtung umfasst:

eine Hochdruckmischvorrichtung (10), die eine Mischkammer (11) umfasst, die sich in axialer Richtung erstreckt und mit einem Gießkanal (12) kommuniziert, der orthogonal zur axialen Richtung der Mischkammer (11) ausgerichtet ist, wobei die Hochdruckmischeinrichtung (10) so konfiguriert ist, dass der Gießkanal (12) einen Innendurchmesser (D2) und einen Querschnitt zwischen 0,5 und 8 cm$^2$ aufweist,
wobei die Hochdruckmischvorrichtung (10) betriebsmäßig mit einer Dosiereinrichtung (PA, PB; FTA, FTB) verbunden ist, die zum Mischen und Eingießen eines Stroms (F) einer reaktiven Flüssigkeitsmischung in einen Auftreffpunkt oder -bereich (P) des offenen Formhohlraums oder der Schale (19) konfiguriert ist, der bzw. die mit Schaum gefüllt werden soll;
wobei die Hochdruckmischvorrichtung (10) und die Dosiereinrichtung (PA, PB; FTA, FTB) betriebsmäßig mit einer programmierbaren Steuereinheit (CU) verbunden sind, wobei die programmierbare Steuereinheit (CU) einen Hauptcontroller (CM) zum Steuern der Durchflussrate (QV) der zu gießenden reaktiven Flüssigkeitsmischung als Funktion der Gießzeit (T) und eine Prozesslogik der Hochdruckmischeinrichtung (10) umfasst; wobei die programmierbare Steuereinheit (U) für jede reaktive chemische Komponente (A, B) Hilfsregler (CA, CB) umfasst, die so programmiert sind, dass sie ein erstes Referenzsignal (REF A, REFB) der über die Zeit (T) variablen Durchflussrate bereitstellen, wobei die Durchflussrate durch den Hauptregler (CM) programmiert wird, und ein zweites Signal (FFA, FFB) im Feedforward-Modus und in einer Fehlerregelschleife als Rückkopplung eines Signals (FRA, FRB) eines Durchflusswandlers (FTA, FTB) bereitstellen, der stromabwärts einer Versorgungspumpe (PA, PB) positioniert ist;
wobei die programmierbare Steuereinheit (CU) Steuermittel für die Durchflussrate (Q1, Q2) des in den offenen Formhohlraum gegossenen reaktiven Flüssigkeitsgemischs umfasst, die konfiguriert sind, um in einem ersten Schritt eine abgemessene Menge des Gemischs mit einer anfänglichen Übergangsdurchflussrate (Q1) zu messen, zu mischen und zu gießen, die geringer ist als eine Durchflussrate im nachfolgenden Betrieb (Q2), wobei die anfängliche Übergangsdurchflussrate (Q1) auf einen Wert programmiert und gesteuert wird, der so ist, dass sich im anfänglichen Übergangsschritt ein erster Gemischpool (PZ1) mit einem unregelmäßigen Rand des reaktiven Flüssigkeitsgemischs auf der Bodenfläche (18) bildet, ohne dass Spritzer vorhanden sind oder mit Spritzern, die eine begrenzte Flugdistanz (FD) haben, und um einen zweiten nachfolgenden Pool des reaktiven Gemischs (PZ2) zu bilden, der eine Breite (DP) aufweist, die etwa gleich oder größer als das Drei- oder Vierfache des Innendurchmessers (D2) des Gießkanals (12) ist, und einen erhöhten Umfangsrand in Form einer Wellenfront (FO) mit einem Wellenberg (PC) mit einer Höhe (H) aufweist, die größer ist als die Dicke (S2) eines inneren Bereichs des zweiten Gemischpools (PZ2), in Abwesenheit von Spritzern oder mit Spritzern, die eine begrenzte Flugdistanz (FD) aufweisen, der in dem offenen Formhohlraum oder in der Schale (19) enthalten ist, wobei die Strömungsraten-Steuermittel (Q1, Q2) konfiguriert sind, um auf den Übergangsschritt folgend das Gießen des reaktiven Flüssigkeitsgemischs in Richtung des nächsten größeren Pools (PZ2) zu erhöhen, bis der Betriebsströmungsratenbereich (Q2) erreicht ist, wobei die Gießbedingungen eines kohäsiven oder laminaren Stroms (F) aufrechterhalten werden und die Betriebsströmungsbedingungen des Stroms (F) des reaktiven Flüssigkeitsgemischs so sind, dass keine Spritzer (SP) entstehen oder Spritzer mit einer begrenzten Flugdistanz (FD) entstehen, die geringer ist als die Distanz zwischen dem Aufprallpunkt oder -bereich (P) und der Umfangskante (21), oder eines Teils (I) des offenen Formhohlraums (19) oder der Schale, der mit Schaum gefüllt werden soll, in dem ein Einsatz oder eine Trennwand oder Wand, der bzw. die nach oben ragt, vorgesehen ist.

**15.** Einrichtung nach Anspruch 14, wobei die Mittel zum Steuern der Durchflussraten der reaktiven Flüssigkeitsmischung eine Steuerfunktion (CM) der Gesamtdurchflussrate (QV) und eine Steuerfunktion der Durchflussraten der einzelnen reaktiven chemischen Komponenten (A, B) umfassen, die in der Steuereinheit (CU) programmiert sind und in Abhängigkeit von ihrer Reaktionszeit und Gießzeit (T) eingegossen werden sollen.

**16.** Einrichtung nach Anspruch 14, die ein Drossel- und Teilverschlusselement (25, 26) einer Auslassöffnung (11') der Mischkammer (11), die mit dem Gießkanal (12) in Verbindung steht, und ein einstellbares Element (28) zum Stoppen des Drosselelements (25, 26) in einem teilweise geschlossenen Zustand der Auslassöffnung (11') der Mischkammer (11) umfasst.

**17.** Einrichtung zum Gießen der chemisch reaktiven Mischung nach Anspruch 14, wobei die Steuerfunktion oder die Durchflussregler (CA, CB) der Polymerkomponenten (A, B) so programmiert sind, dass sie die Durchflussrate (Q2) der reaktiven chemischen Mischung während der gesamten Betriebsgießbedingungen nach einem ersten Übergangsschritt ändern.

**Revendications**

**1.** Procédé de coulage, dans une condition sans éclaboussures ou avec des éclaboussures ayant une distance de vol (FD) limitée, d'un flux (F) d'un mélange liquide d'un premier (A) et d'au moins un second (B) composant chimiquement réactif convenant à la formation d'une résine polymère, dans une cavité de moulage ouverte (19) ou une coquille à remplir de mousse, ayant une surface inférieure (18) et un bord périphérique (21), et par un dispositif de mélange à haute pression (10) comprenant une chambre de mélange (11) qui communique avec un conduit de coulage (12) ayant un diamètre interne (D2), ledit conduit de coulage (12) étant orienté orthogonalement par rapport à la chambre de mélange ;
dans lequel le dispositif de mélange à haute pression (10) est conçu pour couler un débit régulé avec une valeur de régime (Q2), et est connecté de manière opérationnelle à un appareil de commande programmable, ledit procédé comprenant les étapes consistant à :

couler, au cours d'une étape transitoire initiale, un flux (F) de mélange liquide réactif avec un débit de coulage réduit (Q1) qui est comparativement inférieur à un débit en régime (Q2) du dispositif de mélange à haute pression (10), orienter le flux (F) de mélange liquide réactif vers un point ou une zone d'impact (P), former un bassin de mélange sur la surface inférieure (18) de la cavité de moulage ouverte (19), **CARACTÉRISÉ PAR** LES ÉTAPES CONSISTANT À :

réguler un débit (QV) du mélange liquide réactif en fonction d'un temps de coulage (T) et en fonction d'une logique de processus du dispositif de mélange à haute pression (10) ;
fournir, pour chaque composant chimiquement réactif (A, B), un premier signal de référence (REFA, REFB) du débit qui est variable dans le temps (T) ;
fournir, pour chaque composant chimiquement réactif (A, B), un second signal (FFA, FFB) en mode anticipatif et dans une boucle de régulation d'erreur, en rétroaction, d'un signal (FRA, FRB) d'un transducteur de débit (FTA, FTB) positionné en aval d'une pompe d'alimentation (PA, PB) ;

couler, au cours de l'étape transitoire initiale, un flux (F) de mélange liquide réactif avec le débit réduit (Q1) en maintenant des conditions de coulage de flux qui, lors de l'impact avec la surface (18) de la cavité de moulage (19), ne forment pas d'éclaboussures ou forment des éclaboussures ayant une distance de vol (FD) limitée inférieure à la distance entre le point ou la zone d'impact (P) et une zone plus proche dudit bord périphérique (21) de ladite cavité (19), ou de ladite coquille, ou d'une zone spécifique de ladite cavité de moulage ouverte (19), dans lequel un insert ou une cloison ou une paroi faisant saillie vers le haut est pourvu, formant dans une première étape un premier bassin de mélange (PZ1) ayant un bord irrégulier ;

couler, dans l'étape transitoire initiale, dans le bassin initial de mélange (PZ1) une quantité mesurée d'un mélange liquide réactif, toujours maintenir un débit de coulage réduit (Q1) et des conditions de coulage qui ne produisent pas d'éclaboussures, ou qui produisent des éclaboussures ayant une distance de vol (FD) limitée, former un second bassin ultérieur (PZ2) de dimensions supérieures ou plus grandes que ledit premier bassin initial (PZ1) de mélange liquide réactif, dans lequel le second bassin (PZ2) est conçu avec un bord périphérique surélevé, sous la forme d'un front d'onde (FO) ayant un pic d'onde (PC) d'une hauteur (H) supérieure à l'épaisseur (S2) d'une zone interne délimitée par ledit bord périphérique surélevé dudit second bassin ultérieur de mélange (PZ2), et ayant une largeur (DP) qui est environ égale à trois ou quatre fois le diamètre interne (D2) du conduit de coulage (12) ;

augmenter le coulage du mélange liquide réactif vers ledit second bassin ultérieur plus grand (PZ2), après l'étape transitoire initiale, jusqu'au débit en régime (Q2) ; et maintenir, pour le mélange réactif s'écoulant du conduit de coulage (12) avec un diamètre interne (D2), des conditions de flux cohésif, dans lesquelles ledit mélange réactif, une fois initialement rempli dans ledit conduit de coulage (12), s'écoule dudit conduit de coulage (12) sans séparations de veines, mais avec d'éventuels mouvements internes transversaux au même flux, cependant contenu à l'intérieur du jet avec une veine sensiblement parallèle à la trajectoire du flux (F), ou il s'écoule dans des conditions de flux laminaire, sans mouvements internes possibles transversaux au flux, et avec une vitesse parallèle à la direction dudit flux (F) ; le conduit de coulage ayant une section comprise entre 0,5 cm$^2$ et 8 cm$^2$.

2. Procédé de coulage du mélange réactif selon la revendication 1, **caractérisé par la** production d'un mouvement relatif entre le conduit de coulage (12) du dispositif de mélange à haute pression (10) et la surface inférieure (18) de la cavité de moulage ouverte (19).

3. Procédé de coulage du mélange réactif liquide selon l'une quelconque des revendications précédentes, **caractérisé par le** coulage du flux (F) de mélange réactif à une vitesse de coulage (V) liée aux débits (Q1, Q2) du mélange réactif versé et au diamètre interne (D2) du conduit de coulage (12), pendant les étapes de transition et de débit en régime (Q1, Q2), et dans lequel le débit en régime (Q2) du mélange réactif, versé après l'étape de transition initiale, est modifié au niveau d'une zone spécifique (I) de la cavité de moulage ouverte (19) ou de la coquille où un insert, une cloison ou une paroi faisant saillie vers le haut est pourvu.

4. Procédé de coulage d'un mélange réactif de polyuréthane selon l'une ou plusieurs des revendications précédentes, dans lequel la chambre de mélange (11) est conçue avec une ouverture de sortie (11') ayant un diamètre (D1), dans laquelle, au cours de l'étape transitoire initiale, le débit (Q1) du mélange réactif est versé sur la base de la formule générale 1 suivante :

$$1) \qquad Q = C \cdot Ad + B$$

où

Q - est le débit de coulage pendant l'étape transitoire initiale, en cm$^3$/sec, en l'absence d'éclaboussures ou avec des éclaboussures ayant une distance de vol limitée ;
Ad - est la section transversale du canal de coulage (12), comprise entre 0,5 et 8 cm$^2$ ;
C - est un coefficient de vitesse moyenne du flux versé, ayant une valeur comprise entre 1 et 95 cm/sec ;
B - est un coefficient de débit de base supplémentaire en cm$^3$/sec. dérivant d'une interpolation linéaire des débits versés (Q) pour différentes valeurs du diamètre (D2) du conduit de coulage (12), dans des conditions sans éclaboussures ou avec des éclaboussures ayant une distance de vol limitée et ayant une valeur comprise entre 20 et 420 cm$^3$/sec.

**5.** Procédé de coulage du mélange réactif de polyuréthane selon la revendication 4, **caractérisé par la** fermeture partielle de l'ouverture de sortie (11') de la chambre de mélange (11) avec un degré de fermeture partielle exprimé en pourcentage du diamètre (D1) de la chambre de mélange (11), dans lequel il est prévu de réduire l'ouverture de sortie (11') de la chambre de mélange (11) avec un degré de fermeture partielle compris entre 0 % et 40 %, sur la base de la formule 2 suivante :

$$2) \quad Q_{oo} = C_o{\cdot}Ad + B_o$$

où

Qoo - est le débit de coulage, pendant l'étape transitoire initiale, qui ne produit pas d'éclaboussures (condition « zéro éclaboussure »), en $cm^3$/sec ;
Ad - est la section transversale du conduit de coulage, en $cm^2$ ;
$C_o$ - est le coefficient de vitesse du flux versé en l'absence d'éclaboussures, compris entre 1 et 50 cm/sec ;
$B_o$ - est le coefficient de débit de base compris entre 20 et 250 $cm^3$/sec.

**6.** Procédé de coulage du mélange réactif de polyuréthane selon la revendication 4, **caractérisé par** la fermeture partielle de l'ouverture de sortie (11') de la chambre de mélange (11) avec un degré de fermeture partielle exprimé en pourcentage du diamètre (D1) de la chambre de mélange (11), dans lequel il est prévu de fermer partiellement l'ouverture de sortie (11') avec un degré de fermeture partielle élevé supérieur à 40 % du diamètre (D1) de la chambre de mélange (11) ;
dans lequel, au cours de l'étape transitoire initiale, le débit de mélange (Q1) est versé sur la base de la formule 3 suivante :

$$3) \quad Q_{op} = C_1{\cdot}Ad + B_1$$

où

$Q_{op}$ - est le débit de coulage, pendant la phase transitoire initiale, qui ne produit pas d'éclaboussures (condition « zéro éclaboussure »), en $cm^3$/sec, avec une fermeture partielle élevée ;
Ad - est la section transversale du conduit de coulage, en $cm^2$ ;
$C_1$ - est le coefficient de vitesse de flux, compris entre 1 et 50 cm/sec ;
$B_1$ - est le coefficient de débit de base compris entre 20 et 300 $cm^3$/sec.

**7.** Procédé de coulage du mélange de polyuréthane réactif selon la revendication 4, produisant des éclaboussures ayant une distance de vol (FD) à partir de la zone d'impact (P), égale ou inférieure à une distance de référence spécifique, **caractérisé par la** fermeture partielle de l'ouverture de sortie (11') de la chambre de mélange (11) avec un degré de fermeture partielle exprimé en pourcentage du diamètre (D1) de la chambre de mélange (11), dans lequel il est prévu de fermer partiellement l'ouverture de sortie (11') de la chambre de mélange (11) avec un degré de fermeture partielle inférieur compris entre 0 % et 40 % du diamètre (D1) de la chambre de mélange (11) ; et
dans lequel, au cours de l'étape transitoire initiale, le débit de mélange (Q1) est versé sur la base de la formule 4 suivante :

$$4) \quad Q_{1so} = C_2{\cdot}Ad + B_2$$

où

$Q_{1so}$ - est le débit de coulage pendant l'étape transitoire initiale qui produit des éclaboussures de mélange avec une distance de vol (DF) à partir de la zone d'impact (P), égale ou inférieure à une distance de référence spécifique, exprimée en $cm^3$/sec ;
Ad - est la section transversale du conduit de coulage (12), en $cm^2$ ;
$C_2$ - est le coefficient de vitesse du flux compris entre 50 et 90 cm/sec ;
$B_2$ - est le coefficient de débit de base compris entre 200 et 350 $cm^3$/sec.

**8.** Procédé de coulage du mélange réactif de polyuréthane selon la revendication 4, **caractérisé par la** fermeture partielle de l'ouverture de sortie (11') de la chambre de mélange (11) avec un degré de fermeture partielle exprimé en pourcentage du diamètre (D1) de la chambre de mélange (11), dans lequel il est prévu de fermer partiellement l'ouverture de sortie (11') de la chambre de mélange (11) avec un degré de fermeture partielle supérieur à 40 % du diamètre (D1) de la chambre de mélange (11) ; et
dans lequel, au cours de l'étape transitoire initiale, le débit de mélange (Q1) est versé sur la base de la formule 5 suivante :

$$5) \quad Q_{1sp} = C_3{\cdot}Ad + B_3$$

où

$Q_{1so}$ - est le débit de coulage pendant l'étape transitoire initiale qui produit des éclaboussures de mélange ayant une distance de vol (DF) à partir de la zone d'impact (P), égale ou inférieure à une distance de référence spécifique, exprimée en $cm^3$/sec ;

Ad- la section transversale du conduit de coulage, en $cm^2$ ;

$C_3$- est le coefficient de vitesse du flux compris entre 50 et 95 cm/sec ;

$B_3$ - est le coefficient de débit de base compris entre 250 et 420 $cm^3$/sec.

9. Procédé de coulage du mélange réactif de polyuréthane selon l'une quelconque des revendications 4 à 8, dans lequel les valeurs numériques des coefficients de vitesse (C) et des coefficients de débit de base (B) augmentent à mesure que le degré de fermeture partielle de l'ouverture de sortie (11') de la chambre de mélange (11) augmente.

10. Procédé de coulage du mélange réactif de polyuréthane selon la revendication 4, dans lequel, après l'étape transitoire de coulage initiale, l'ouverture de sortie (11') de la chambre de mélange (11) étant partiellement fermée jusqu'à 40 % inclus, le débit de mélange réactif est augmenté jusqu'à 100 % pour des sections du conduit de coulage (12) inférieures à 1,8 $cm^2$ inclus, et peut être respectivement augmenté jusqu'à 150 % pour des sections du conduit de coulage supérieures à 1,8 $cm^2$, par rapport au débit de coulage initial (Q1).

11. Procédé de coulage du mélange réactif de polyuréthane selon la revendication 4, dans lequel, après l'étape transitoire de coulage initiale, l'ouverture (11') de la chambre de mélange (11) ayant été partiellement fermée au-delà de 40 %, le débit de mélange réactif est augmenté jusqu'à 50 %, dans des conditions en régime opératoire succédant à l'étape transitoire initiale, pour des sections du conduit de coulage (12) inférieures ou égales à 1,8 $cm^2$, et peut être respectivement augmenté jusqu'à 100 % pour les conditions en régime opératoire pendant la totalité du coulage après l'étape transitoire initiale pour des sections du conduit de coulage (12) supérieures à 1,8 $cm^2$ par rapport au débit de coulage initial (Q1).

12. Procédé de coulage du mélange réactif de polyuréthane selon la revendication 4, dans lequel, après l'étape transitoire initiale, le débit (Q1) du mélange réactif est augmenté pendant toute la durée de la condition de coulage en régime opératoire succédant à l'étape transitoire initiale, sur la base de la formule 6 suivante :

$$6) \quad Q_{MSP} \leq C \cdot Ad + B$$

où

$Q_{MSP}$ - est le débit de coulage de l'étape transitoire initiale, en $cm^3$/sec

C - est le coefficient de vitesse, égal à 152 cm/sec.

Ad - est la section transversale du conduit de coulage, en $cm^2$

B - est le coefficient de débit de base supplémentaire, égal à 390 $cm^3$/sec.

13. Procédé de coulage du mélange réactif selon la revendication 1, dans lequel la largeur (DP) du second bassin successif de mélange réactif (PZ2) est comprise entre 3 et 6 fois le diamètre (D2) du conduit de coulage (12), ou plus, la valeur de la largeur (DP) du second bassin (PZ2) diminuant au fur et à mesure que la viscosité du mélange réactif diminue.

14. Appareil permettant de couler, dans une condition sans éclaboussures ou avec des éclaboussures ayant une distance de vol (FD) limitée contenue à l'intérieur d'une cavité de moulage ouverte ou d'une coquille (19), un flux (F) d'un mélange liquide chimiquement réactif d'un premier (A) et d'au moins un second (B) composant chimiquement réactif, apte à former une résine polymère, dans ladite cavité de moulage ouverte ou dans ladite coquille (19) à remplir de mousse, ayant une surface inférieure (18), selon le procédé d'une ou de plusieurs revendications précédentes, dans lequel l'appareil comprend :

un dispositif de mélange à haute pression (10) comprenant une chambre de mélange (11) s'étendant dans une direction axiale et communiquant avec un conduit de coulage (12) orienté orthogonalement par rapport à ladite direction axiale de ladite chambre de mélange (11), dans lequel l'appareil de mélange à haute pression (10) est conçu avec le conduit de coulage (12) ayant un diamètre interne (D2) et une section transversale comprise entre 0,5 et 8 $cm^2$, ledit dispositif de mélange à haute pression (10) étant connecté de manière opérationnelle à un appareil de dosage (PA, PB ; FTA, FTB) conçus pour mélanger et couler un flux (F) de mélange liquide réactif dans un point ou une zone d'impact (P) de la cavité de moulage ouverte ou de la coquille (19) à remplir de mousse ;

dans lequel le dispositif de mélange à haute pression (10) et l'appareil de dosage (PA, PB ; FTA, FTB) sont connectés de manière opérationnelle à une unité de commande programmable (CU), ladite unité de commande programmable (CU) comprenant un dispositif de commande principal (CM) pour réguler le débit (QV) du mélange liquide réactif à couler en fonction du temps de coulage (T), et une logique de processus de l'appareil de mélange à haute pression (10) ; ladite unité de commande programmable (U), pour chaque composant chimique réactif (A, B), comprenant des dispositifs de commande auxiliaires (CA, CB) programmés pour fournir un premier signal de référence (REFA, REFB) du débit qui est variable dans le temps (T), le débit étant programmé par le dispositif de commande principal (CM), et pour fournir un second signal (FFA, FFB) en mode anticipatif et dans une boucle de régulation d'erreur, en rétroaction, d'un signal (FRA, FRB) d'un transducteur de débit (FTA, FTB) positionné en aval d'une pompe d'alimentation (PA, PB) ; ladite unité de commande programmable (CU) comprenant des moyens de régulation du débit (Q1, Q2) du mélange liquide réactif versé dans la cavité de moulage ouverte, configurée pour mesurer, mélanger et couler dans une première étape une quantité mesurée de mélange avec un débit transitoire initial (Q1) qui est inférieur à une condition de débit en régime successive (Q2), dans laquelle le débit transitoire initial (Q1) est programmé et régulé à une valeur telle qu'il forme dans l'étape transitoire initiale, un premier bassin de mélange (PZ1) avec un bord irrégulier de mélange liquide réactif sur ladite surface inférieure (18), en l'absence d'éclaboussures ou avec des éclaboussures ayant une distance de vol (FD) limitée, et pour former un second bassin successif de mélange réactif (PZ2) ayant une largeur (DP) à peu près égale ou supérieure à trois ou quatre fois ledit diamètre interne (D2) du conduit de coulage (12), et ayant un bord périphérique surélevé en forme de front d'onde (FO) ayant un pic d'onde (PC) d'une hauteur (H) supérieure à l'épaisseur (S2) d'une zone interne dudit second bassin de mélange (PZ2), en l'absence d'éclaboussures ou avec des éclaboussures ayant une distance de vol (FD) limitée qui est contenue à l'intérieur de ladite cavité de moulage ouverte ou dans ladite coquille (19), lesdits moyens de régulation de débit (Q1, Q2) sont configurés pour augmenter, successivement à l'étape transitoire, le coulage du mélange liquide réactif vers ledit plus grand bassin suivant (PZ2), jusqu'au débit en régime opératoire (Q2), en maintenant des conditions de coulage d'un flux (F) cohésif ou laminaire, et les conditions de coulage en régime du flux (F) de mélange liquide réactif de manière à ne pas produire d'éclaboussures (SP) ou à produire des éclaboussures ayant une distance de vol (FD) limitée inférieure à la distance entre le point ou la zone d'impact (P) et ledit bord périphérique (21) ou d'une partie (I) de ladite cavité de moulage ouverte (19) ou coquille à remplir de mousse dans laquelle un insert ou une cloison ou une paroi faisant saillie vers le haut est pourvu.

**15.** Appareil selon la revendication 14, dans lequel lesdits moyens de régulation des débits de mélange liquide réactif comprennent une fonction de régulation (CM) du débit total (QV) et une fonction de régulation des débits des composants chimiques réactifs individuels (A, B), programmés dans l'unité de commande (CU), à couler, en fonction de leur temps de réaction et du temps de coulage (T).

**16.** Appareil selon la revendication 14, comprenant un élément d'étranglement et de fermeture partielle (25, 26) d'une ouverture de sortie (11') de la chambre de mélange (11) communiquant avec le conduit de coulage (12), et un élément réglable (28) pour arrêter l'élément d'étranglement (25, 26) dans un état de fermeture partielle de l'ouverture de sortie (11') de la chambre de mélange (11).

**17.** Appareil pour couler le mélange chimiquement réactif selon la revendication 14, dans lequel la fonction de commande ou les dispositifs de régulation de débit (CA, CB) des composants polymères (A, B) sont programmés pour modifier le débit (Q2) du mélange chimique réactif pendant toute la durée des conditions de coulage en régime opératoire succédant à une étape transitoire initiale.

**FIG.1**

**FIG.2**

**FIG.3**

**FIG.4**

**FIG.5**

FIG.6

FIG.7

FIG.8

FIG.9

FIG.10

FIG.11

FIG.12

**FIG.13**

FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4098585 A
- US 3975128 A
- US 4175874 A
- US 4332335 A
- US 4966466 A
- EP 0230921 A
- EP 2366525 A
- US 4726933 A
- US 4096585 A
- US 6079867 A